# EUROPEAN PATENT APPLICATION

(11) **EP 4 596 916 A1**
(43) Date of publication of application: **06.08.2025**
(21) Application number: 25150795.0
(22) Date of filing: 08.01.2025
(51) Int. Cl.: F16D 55/36

(54) **BRAKING SYSTEM ATTACHMENT ASSEMBLY AND METHOD FOR ATTACHING SAID BRAKING SYSTEM**

(30) Priority: 31.01.2024 US 202418428829
(71) Applicant: Honeywell International Inc., Charlotte, NC 28202 (US)
(72) Inventor: SHULA, Brian, Charlotte, 28202 (US); BEEHLER, Jonathan T., Charlotte, 28202 (US); WURTZ, Zachary, Charlotte, 28202 (US)
(74) Representative: Haseltine Lake Kempner LLP

(57) **Abstract**

Brake system (12) configured to compress a brake disc stack to reduce and/or limit rotational motion of a wheel about a wheel axis. The brake system (12) is configured to transmit a compression force on the disc stack to a plate member (20), such as a backing plate. The plate member (20) may be configured to transmit the compression force to a support member (64) such as a torque tube via one or more torque pads. The brake system (12) includes a coupling system configured to couple the plate member and the support member. The coupling includes an elastic member (96) configured to exert a force on a pin (97) in a direction opposite the compression force to assist in keeping a locking tail of the pin (97) engaged with the support member. (64)

## Description

### TECHNICAL FIELD

The present disclosure relates to a braking system of a vehicle.

### BACKGROUND

Vehicles, such as aircrafts, may use a wheel brake system that includes a multi-disc brake system. For example, the multi-disc brake system may include a disc stack comprising a plurality of rotor discs engaged with a wheel and a plurality of stator discs interleaved with the rotor discs. The rotor discs and wheel are configured to rotate around an axle, while the stator discs remain stationary. To decelerate rotational motion of a rotating wheel, the brake system may displace pistons against a pressure plate to compress the rotating rotor discs engaged with the wheel against the stationary stator discs, therefore producing torque that decelerates the rotational motion of the wheel. In some examples, the rotor discs may be engaged with the wheel via rotor drive keys positioned on an interior surface of the wheel. In some examples, stator discs may be engaged with a stationary torque tube surrounding the axle via splines positioned on the torque tube. In some such examples, the brake system may be configured to compress the rotor discs and the stator discs between the piston and a backing plate supported by the torque tube.

### SUMMARY

The present disclosure describes example brake systems utilized to reduce and/or substantially prevent a rotation of a wheel. The brake system is configured to compress a brake disc stack to reduce and/or limit rotational motion of the wheel about the wheel axis. The brake system is configured to transmit a compression force on the disc stack to a plate member (e.g., a backing plate). The plate member is configured to transmit the compression force to a support member (e.g., a torque tube) via one or more torque pads of the brake system. The brake system includes a coupling system configured to couple the plate member and the support member.

In some examples, a brake system comprises: a plate member defining a plate passage extending from a first plate side of the plate member to a second plate side of the plate member; a support member defining a member passage extending from a first member side of the support member to a second member side of the support member; a pin including a shank portion, a head portion coupled to a first end of the shank portion, and a locking tail coupled to a second end of the shank portion opposite the first end, wherein the shank portion is configured to extend from the plate passage to the member passage when the second plate side faces the first member side, and wherein the head portion is configured to dispose within the plate passage and the locking tail is configured to engage the support member when the shank portion extends from the plate passage to the member passage; and an elastic member configured to dispose within the plate passage and between the head portion and the locking tail when the head portion is disposes within the plate passage and the locking tail engages the support member, wherein the elastic member is configured to exert a force on the pin in a direction from the support member to the plate member

In some examples, a brake system comprises: a backing plate defining a plate passage extending in an axial direction from a first side of the backing plate to a second side of the backing plate; a pin including: a shank portion extending through the plate passage, wherein the shank portion is configured to extend from the plate passage to a support member passage defined by a torque tube of the brake system and extending from a first side of the torque tube to a second side of the torque tube, wherein the second side of the backing plate is configured to face the first side of the torque tube, and wherein the backing plate is configured to transfer a compression force from a disc stack of the brake system to the torque tube, and a head portion coupled to a first end of the shank portion a locking tail coupled to a second end of the shank portion opposite the first end, wherein the head portion is disposed within the plate passage, and wherein is configured to dispose within the support member passage; a washer surrounding the shank portion between the head portion and the locking tail and engaging a boundary of the plate passage; and an elastic member surrounding the shank portion between the washer and the head portion, wherein the elastic member is configured to transfer a force in a direction opposite the compression force on the head portion when the elastic member is compressed between the washer and the head portion.

In some examples, a technique comprises: extending, using a pin, a shank portion of the pin from a plate passage to a member passage, wherein the plate passage is defined by a plate member and extends from a first plate side of the plate member to a second plate side of the plate member, wherein the member passage is defined by a support member and extends from a first member side of the support member to a second member side of the support member, and wherein the second plate side faces the first member side; positioning, using the pin, a head portion coupled to a first end of the shank portion within the plate passage when the shank portion of the pin extends from the plate passage to the member passage; engaging, using the pin, a locking tail with the support member when the shank portion of the pin extends from the plate passage to the member passage and the head portion is disposed within the plate passage, wherein the locking tail is coupled to a second end of the shank portion opposite the first end; and exerting, using an elastic member between the head portion and the locking tail, a force on the pin in a direction from the support member to the plate member when the head portion disposes in the plate passage and the locking tail engages the support member

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a perspective view illustrating an example wheel including a plurality of rotor drive keys on an interior surface of the wheel.
FIG. 2 is a schematic cross-sectional view illustrating an example wheel and brake system including the wheel of FIG. 1.
FIG. 3 is a plan view illustrating portions of a plate member and a support member of a brake system viewed in a first axial direction of the brake system.
FIG. 4 is a plan view illustrating portions of the brake system of FIG. 3 viewed in a second axial direction of the brake system.
FIG. 5 is a schematic cross-sectional view of a plate member and a support member, with the cutting plane taken parallel to the page.
FIG. 6 is schematic cross-sectional view of a coupling system with a plate member in a first position relative to a support member, with the cutting plane taken parallel to the page.
FIG. 7 is schematic cross-sectional view of the coupling system of FIG. 6 with the plate member in a second position relative to the support member, with the cutting plane taken parallel to the page.
FIG. 8 is a schematic perspective view of a locking tail in an unlocked configuration.
FIG. 9 is a schematic perspective view of a locking recess of a support member.
FIG. 10 is a schematic perspective view of the locking tail of FIG. 8 in a locked configuration.
FIG. 11A is a front view of a portion of a support member.
FIG. 11B is a cross-sectional view of the portion of the support member of FIG. 11A, with the cutting plane indicated by A-A' of FIG. 11A.
FIG. 11C is a cross-sectional view of the portion of the support member of FIG. 11A, with the cutting plane indicated by B-B' of FIG. 11A.
FIG. 11D is a back view of the portion of the support member of FIG. 11A, FIG. 11B, and FIG. 11C.
FIG. 12 is a schematic cross-sectional view of a first example of the coupling system, with the cutting plane taken parallel to the page.
FIG. 13 is a schematic cross-sectional view of a second example of the coupling system, with the cutting plane taken parallel to the page.
FIG. 14 is a flow diagram illustrating an example method of coupling a plate member and a support member.

### DETAILED DESCRIPTION

The disclosure describes articles, systems, and techniques relating to an assembly comprising a wheel and a brake system, and, in particular, an assembly configured to couple a first component of the brake system (e.g., a backing plate) to a second component of the brake system (e.g., a torque tube). The wheel is configured to rotate around a wheel axis. The brake system includes a disc stack which includes one or more rotor discs and one or more stator discs. For example, the disc stack may include a plurality of rotor discs interleaved with a plurality of stator discs. The rotor discs are rotationally coupled with the wheel, such that a rotation of the wheel around the wheel axis causes rotation of the rotor discs around the wheel axis. The stator discs are configured to remain substantially stationary relative to the wheel and the rotor discs. The brake system is configured to compress the disc stack to cause engagement of friction surfaces on the rotating rotor discs and the stationary stator discs, reducing a rotational speed of the rotor discs around the wheel axis. The rotor discs are configured to engage the wheel, such that the reduction in the rotational speed of the rotor discs causes a reduction in the speed of the wheel. The brake system may be configured to compress the disc stack against a plate member (e.g., a backing plate) supported by a support member (e.g., a torque tube).

In examples, the brake system is configured to compress the disc stack (e.g., using an actuator) between a pressure plate and the backing plate to cause engagement of friction surfaces within the disc stack. The braking system may be configured such that, when the actuator exerts a compression force to compress the disc stack against the backing plate (e.g., to slow the wheel), the backing plate transmits at least some portion of the compression force via a torque pad to the support member (e.g., a torque tube). In examples, the brake system is configured such that a force exerted on disc stack by the actuator causes the disc stack to translate, relative to the support member, toward the plate member. The plate member may be configured to remain substantially stationary (e.g., move less than the disc stack) with respect to the support member when the disc stack translates relative to the support member. Hence, the plate member may be configured to resist the translation of the disc stack, such that the disc stack is compressed by the actuator between the pressure plate and the plate member.

The brake system may be configured such that, when the actuator exerts a compression force to compress the disc stack against the plate member (e.g., to slow the wheel), the plate member transfers at least some portion of the compression force substantially through a torque pad to the supporting support member. In examples, the torque pad is disposed substantially between the plate member and the support member. For example, the torque pad may include a pad face configured to receive the compression force from the plate member and a back face configured to transmit the compression force to the support member. In examples, the torque pad is configured to transfer the compression force to a flange portion of the support member extending in a direction radially outward from the wheel axis.

In some examples, the support member is configured to support the torque pad using a boss (e.g., a torque tube boss) or other portion of the support member. For example, the support member may be configured to support the torque pad using the flange portion of the support member. The support member may support the torque pad such that the torque pad remains substantially stationary (e.g., with the exception of slight compression and/or pivoting) with respect to the support member when the disc stack translates relative to the support member and the torque pad transfers the compression force from the plate member to the support member. In examples, the pad face of the torque pad is configured to contact and bear against the plate member when the plate member transfers the compression force to the torque pad, but the torque pad may be otherwise uncoupled to the plate member. Stated similarly, the torque pad may be configured such the pad face engages the plate member to receive the compression force, but the brake system is otherwise free of any additional devices, components, and/or fasteners extending between the pad face and the plate member.

The brake system includes a coupling system configured to couple a plate member of a brake system and a support member of the brake system. In examples, the plate member is a backing plate of the brake system. The support member may be a torque tube of the brake system. In examples, the coupling system is configured to couple the plate member and the flange portion of the support member. In examples, the coupling system is configured to remain substantially unloaded when the plate member transfers a compression force to the torque pad. For example, the coupling system may be configured such that the plate member transfers substantially all of the compression force to the support member (e.g., a torque tube) via the torque pad and transfers substantially none of the compression force to the support member via the coupling system when the plate member receives the compression force from the disc stack. In examples, the coupling system is configured to limit movement of the plate member relative to the support member in an axial direction of the wheel. For example, the brake system may be configured to transfer the compression force to the plate member in a first axial direction of the wheel. The coupling system may be configured to limit movement of the plate member relative to the support member in at least a second axial direction opposite the first axial direction. In examples, the coupling system is configured to allow some movement of the plate member relative to the support member (e.g., movement caused by the compression force and/or other operations of the brake system) while limiting movement of the plate member in the second axial direction.

The coupling system includes a pin defining a shank portion. The pin includes a head portion coupled to a first end of the shank portion and a locking tail coupled to a second end of the shank portion. The shank portion is configured to extend from the plate member to the support member (e.g., from a backing plate to a torque tube) to couple the plate member and the support member. The locking tail and/or the head portion may be configured to limit the movement of the plate member relative to the support member in the second axial direction when the shank portion extends from the plate member to the support member. The coupling system includes an elastic member (e.g., a spring member) configured to allow slight movement of the plate member relative to the support member in the first axial direction as the locking tail and/or head portion limit movement of the plate member in the second axial direction. In examples, the elastic member is configured to exert a force on the head portion (e.g., in the second axial direction) to hold the pin substantially stationary relative to the support member when the plate member moves relative to the support member.

The shank portion is configured to extend through a plate passage defined by the plate member and a member passage defined by the support member. The plate passage may extend from a first plate side of the plate member (e.g., a side toward the disc stack) to a second plate side of the plate member opposite the first plate side (e.g., a side facing away from the disc stack). The member passage may extend from a first member side of the support member (e.g., a side of the flange portion configured to face toward the second plate side) to a second member side of the support member (e.g., a side of the flange portion facing away from the second plate side). In examples, the brake system is configured such that the second plate side substantially faces the first member side. The head portion may be configured to recess into the plate passage relative to the first plate side when the shank portion extends through the plate passage and the member passage. For example, when the first plate side includes a friction surface configured to contact the disc stack, the head portion may be configured to recess into the plate passage relative to the friction surface.

The locking tail may be configured to contact the second member side of the support member when the shank portion extends through the plate passage and the member passage and the head portion is recessed within the plate passage. In examples, the locking tail is configured to recess into a locking recess of the member passage defined by the support member. In examples, the locking recess opens to the second member side of the support member. The locking tail may be configured to contact a boundary of the locking recess ("locking recess boundary") to contact the second member side. In some examples, the locking tail is configured to establish a locked configuration and an unlocked configuration relative to the locking recess boundary. In examples, the locking tail may be configured to transition between the locked configuration and the unlocked configuration in response to a torque on the shank portion (e.g., when the shank portion causes a rotation of the locking tail relative to the locking recess boundary).

The elastic member is configured to be disposed within the plate passage when the head portion is disposed within the plate passage and the locking tail engages the second member side. The coupling system may be configured such that the elastic member is disposed between the head portion and the locking tail when the elastic member positioned within the plate passage. The elastic member is configured to exert a force on the pin in a direction from the support member to the plate member. For example, the elastic member may be configured to exert the force in the second axial direction when the disc stack is configured to transfer the compression force to the plate member in the first axial direction. In examples, the elastic member includes a first member end configured to exert the force on the pin and a second member end opposite the first member end. A boundary of the plate passage ("plate passage boundary") may be configured to cause the second end to remain substantially stationary with respect to the plate member when the first member end moves relative to the plate member such that, for example, the elastic member exerts the force on the pin when the elastic member is in a compressed state.

In some examples, the coupling system includes washer configured to engage the plate passage boundary such that the washer remains substantially stationary with respect to the plate member. The elastic member may be configured to cause the second member end to engage the washer as the first member end engages the head portion. Hence, the coupling system may be configured such that, when the plate member moves toward the support member in the first axial direction (e.g., as a result of the compression force and/or other operations of the brake system), the second end of the elastic member exerts a force in the second axial direction on the head portion (e.g., due to expansion of the elastic member) to cause the head to remain substantially stationary relative to the support member. The shank portion may be configured to transfer the force in the second axial direction from the head portion to the locking tail, such that the locking tail remains engaged with the locking recess boundary.

In some examples, the locking tail is configured to pass through the plate passage and the member passage when the locking tail is in the unlocked configuration relative to the locking recess boundary. For example, in the unlocked configuration, the locking tail may be configured to pass via the plate passage from the first plate side to the second plate side, and configured to pass via the member passage from the first member side to the second member side. Thus, in examples, the pin is configured such that, in the unlocked configuration, the pin may be inserted from the plate first side through the plate passage and the member passage in the first axial direction (e.g., the direction of the compression force of the brake system). Once the locking tail enters or extends beyond the locking recess, the pin may transfer a torque to the locking tail (e.g., a torque imparted on the head portion) to cause the locking tail to transition from the unlocked configuration to the locked configuration, such that the locking tail engages the locking recess boundary and movement of the locking tail in the second axial direction is limited. The head portion may act to compress the elastic member as the pin transits the plate passage and the member passage in the first axial direction such that, once the locking tail is placed in the locked configuration, the elastic member exerts a force on the pin tending to cause the locking tail to remain seated within the locking recess. In some examples, the head portion defines a drive configured to receive the torque from a driver tool (e.g., a screw driver, hex wrench, or other driver tool) to cause the locking tail to transition from the unlocked configuration to the locked configuration.

In some examples, the locking recess is configured to substantially prevent the locking tail from passing through the member passage from either the member first side to the member second side or from the member second side to the member first side. The pin may be configured such that, when the shank portion is inserted into the member passage in the second axial direction (e.g., the direction opposite the compression force of the brake system), the locking tail substantially seats within the locking recess. The shank portion may be configured to extend into the plate passage when the locking tail substantially seats in the locking recess. In some examples, the head portion may be configured to couple to the shank portion (e.g., the head portion may be a C-clip), such that elastic member exerts a force on the head portion and the shank portion transfers the force to the locking tail to cause the locking tail to remain seated within the locking recess.

In some brake systems, such as brake systems which do not include a locking recess, a coupling assembly coupling a plate member (e.g., a backing plate) and a support member (e.g., a torque tube) may require installation of a holding component (e.g., a cotter pin) to limit movement of a pin relative to the support member and/or the plate member. The coupling assembly may require that the pin extend beyond a surface of the support member in order to allow coupling (e.g., by an installer) of the holding component and the pin. Due to this extension, a support member may be configured to couple to the coupling assembly using one or more bosses protruding in the second axial direction, so that the extension of the pin does not interfere with the hub of a rotating wheel. The protrusion of the bosses may limit a thickness of the plate member (e.g., a thickness of a backing plate) and correspondingly limit an amount of heat sink material (e.g., carbon-comprising material) within the plate member. In the coupling system disclosed herein, the locking tail configured to seat within the locking recess, and/or the elastic member tending to keep the locking tail seated within the locking recess, may limit the necessity for protruding bosses in order to accommodate a holding component. Hence, the coupling system disclosed herein may allow for an increase in the thickness of the plate member and an increase in the amount of heat sink material therein. This may improve heat transfer performance of the plate member during brake system operation, improve the operational life of the plate member, and/or provide other advantages.

The coupling system disclosed herein may simplify installation and/or removal of a plate member (e.g., a backing plate). The coupling system may allow an installer to work essentially from one side of the torque tube, substantially avoiding necessary manipulations in spaces between the torque tube and an outboard side of a wheel (e.g., when the brake system is positioned within a wheel cavity of the wheel). For example, the coupling system disclosed may limit and/or avoid a necessity for installations of a cotter pin (and/or precise bendings thereof) in spaces between the torque tube and the outboard side of the wheel. In some examples, the coupling system may eliminate a need for cotter pins and/or other fasteners for installation, thereby reducing consumables required for installation.

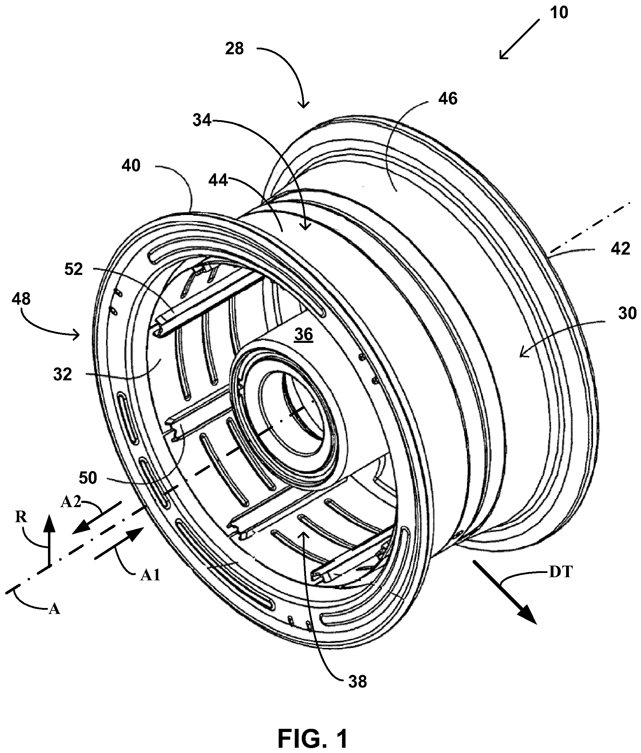

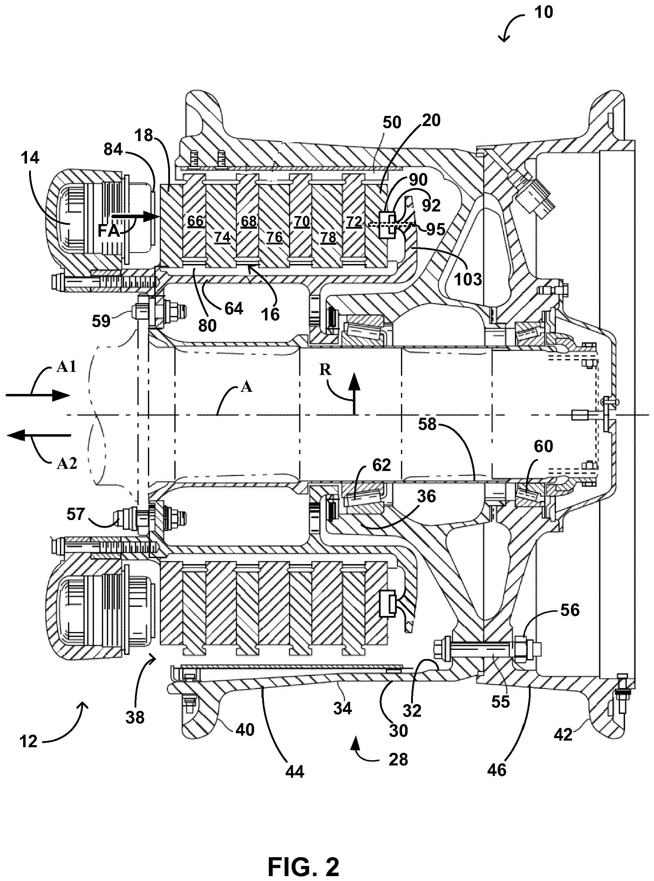

FIG. 1 is a perspective view illustrating an example wheel 10 configured to rotate around an axis of rotation A. In examples, wheel 10 is a part of an aircraft vehicle. In other examples, wheel 10 may be a part of any other vehicle, such as, for example, any land vehicle or other vehicle. FIG. 2 is a schematic cross-sectional view illustrating wheel 10 and an example brake system 12 configured to decelerate a rotation of wheel 10 using an actuator 14 to compress a disc stack 16 (e.g., between a pressure plate 18 and a plate member 20). The cross-section of FIG. 2 is illustrated with a cutting plane perpendicular to the axis of rotation A.

In the example shown in FIG. 1, wheel 10 includes a wheel rim 28 defining an exterior surface 30 and interior surface 32. Wheel rim 28 includes tubewell 34 and wheel hub 36. Interior surface 32 and wheel hub 36 may define a wheel cavity 38 (e.g., a volume) between interior surface 32 and wheel hub 36. In some examples, a tire (not shown) may be mounted on exterior surface 30 of wheel rim 28. Wheel 10 may include an inboard bead seat 40 and an outboard bead seat 42 configured to retain a tire on exterior surface 30 of wheel rim 28. In examples, wheel 10 may comprise an inboard section 44 (e.g., including inboard bead seat 40) and an outboard section 46 (e.g., including outboard bead seat 42). Wheel 10 and/or brake system 12 may define a first axial direction A1 substantially parallel to the axis of rotation A. Wheel 10 and/or brake system 12 may define a second axial direction A2 opposite first axial direction A1. Wheel 10 may be configured to travel in a direction DT substantially perpendicular to the axis of rotation A when wheel 10 rotates around axis of rotation A. Wheel 10 and/or brake system 12 may define a radial direction R substantially perpendicular to first axial direction A1 and second axial direction A2 and extending in a direction from axis of rotation A toward interior surface 32 and/or support member 64 (FIG. 2).

Wheel 10 includes a plurality of rotor drive keys 48 on interior surface 32 of wheel 10, such as rotor drive key 50 and rotor drive key 52. In some examples, each rotor drive key of the plurality of rotor drive keys 48 may extend in a substantially axial direction of wheel 10 (e.g., in a direction parallel to the axis of rotation A). The plurality of rotor drive keys 48 ("rotor drive keys 48") and interior surface 32 are configured to be substantially stationary with respect to each other, such that when wheel 10 (and interior surface 32) rotates around axis of rotation A, each of the rotor drive keys (e.g., rotor drive keys 50, 52) revolves over a closed path around axis A. Consequently, when wheel 10, interior surface 32, and rotor drive keys 48 are rotating around axis of rotation A, a force on one or more of rotor drive keys 48 opposing the direction of rotation acts to slow or cease the rotation. As will be discussed, rotor drive keys 48 may be configured to receive a torque from brake system 12 (FIG. 2) configured to reduce and/or cease a rotation of wheel 10. Rotor drive keys 48 may be integrally formed with interior surface 32, or may be separate from and mechanically affixed to interior surface 32.

FIG. 2 is a schematic cross-sectional view illustrating wheel 10 with brake system 12 positioned at least partially within wheel cavity 38. FIG. 2 illustrates wheel rim 28 as a split rim wheel with lug bolt 55 and lug nut 56 connecting inboard section 44 and outboard section 46, however wheel rim 28 may utilize other configurations (e.g., a unified wheel rim) in other examples. An axial assembly 58 is configured to support wheel 10 while allowing wheel 10 to rotate around axis A using one or more bearings such as bearing 60 and bearing 62. For example, bearings 60, 62 may define a substantially circular track around axial assembly 58. In examples, axis A extends through axial assembly 58.

A support member 64 (e.g., a torque tube) is coupled to axial assembly 58, such that support member 64 remains substantially rotationally stationary when wheel 10 rotates around axial assembly 58 and axis A. Support member 64 may at least partially surround an exterior of axial assembly 58. Axial assembly 58 may be mechanically coupled to a strut or some other portion of a vehicle using, for example, bolt 57 and/or bolt 59, or some other fastening device. In some examples, axial assembly 58 supports and/or houses electrical, pneumatic, hydraulic, and/or other connections and/or sensors (e.g., wheel speed sensors) required for the operation of one or more components of brake system 12. Wheel 10 is shown and described to provide context to the brake system described herein, however the brake system described herein may be used with any suitable wheel assembly in other examples.

In the example shown in FIG. 2, brake system 12 is disposed within wheel 10 (e.g., wheel cavity 38) and configured to engage support member 64 and rotor drive key 50. Brake system 12 is configured to generate a torque to oppose a rotation of wheel 10 around axis A and transfer the torque to rotor drive key 50, reducing and/or eliminating the rotation of wheel 10 around axis A. Brake system 12 includes disc stack 16 which includes one or more rotor discs (e.g., rotor discs 66, 68, 70, 72) and one or more stator discs (e.g., stator discs 74, 76, 78). Rotor discs 66, 68, 70, 72, and/or stator discs 74, 76, 78 may have any suitable configuration. For example, rotor discs 66, 68, 70, 72 and/or stator discs 74, 76, 78 can each be substantially annular discs surrounding axial assembly 58. Stator discs 74, 76, 78 are coupled to support member 64 via a spline 80 and remain rotationally stationary with support member 64 (and axial assembly 58) as wheel 10 rotates. Rotor discs 66, 68, 70, 72 are rotationally coupled to rotor drive key 50 and interior surface 32 and rotate substantially synchronously with wheel 10 around axis A.

Actuator 14 is configured to compress disc stack 16 to bring friction surfaces of rotor discs 66, 68, 70, 72 into contact with friction surfaces of stator discs 74, 76, 78 to generate shearing forces between the discs. The shearing forces cause rotor discs 66, 68, 70, 72 to exert a torque on rotor drive key 50 opposing a rotation of wheel 10. In examples, actuator 14 is configured to cause a piston 84 to translate (e.g., translate substantially parallel to axis A) to compress disc stack 16. Actuator 14 may cause piston 84 to translate using any suitable process. In some examples, actuator 14 is configured to cause translation of piston 84 by supplying and/or venting a pressurized hydraulic fluid to or from a piston chamber. In addition or instead, in some examples, actuator 14 is configured to cause piston 84 to translate through a motion (e.g., a rotary motion) generated by an electric motor.

In examples, actuator 14 is configured to compress disc stack 16 using pressure plate 18 and/or plate member 20. In examples, plate member 20 is a backing plate of brake system 12. For examples, actuator 14 may be configured to exert an actuator force FA (e.g., using piston 84) to cause compression of disc stack 16 substantially between pressure plate 18 and plate member 20. In examples, plate member 20 may be supported by support member 64. For example, plate member 20 may be configured to be substantially stationary with respect to support member 64. Wheel 10 may rotate around plate member 20 when wheel 10 rotates around support member 64. Brake system 12 may be configured such that the actuator force FA exerted on disc stack 16 by actuator 14 causes disc stack 16 to translate toward plate member 20. For example, the actuator force FA may cause rotor discs 66, 68,70, 72 to translate over rotor drive key 50 toward plate member 20 and cause stator discs 74, 76, 78 to translate over spline 80 toward plate member 20.

Plate member 20 is configured to resist the translation of disc stack 16 and exert a reaction force on disc stack 16 opposite the actuator force FA exerted by actuator 14, such that disc stack 16 is compressed by actuator 14 between pressure plate 18 and plate member 20. When support member 64 supports plate member 20, plate member 20 may transfer a compression force to support member 64 in response to the actuator force FA. For example, the compression force may a force having a directionality substantially similar to actuator force FA and a magnitude equal to at least some portion of actuator force FA.

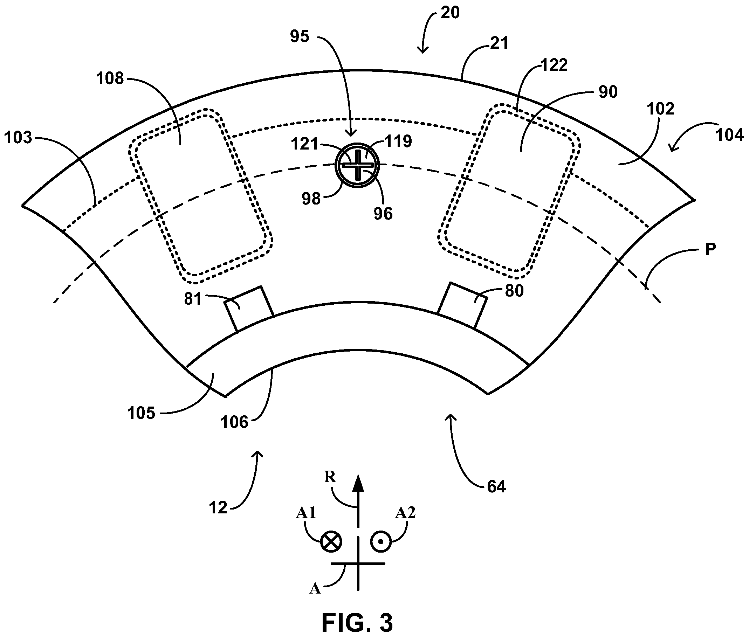

Brake system 12 may include a torque pad 90 configured to transfer the compression force from plate member 20 to support member 64. Torque pad 90 is supported by a boss 92 of brake system 12. In examples, boss 92 is a torque tube boss supported and/or defined by support member 64. Brake system 12 may be configured such that plate member 20 transmits the compression force to torque pad 90, and torque pad 90 transmits the compression force via boss 92 to support member 64. In examples, torque pad 90 is configured to insert into a pocket (e.g., pocket 122 (FIG. 3)) of plate member 20 when boss 92 supports torque pad 90. In some examples, plate 20 may be configured to transmit torque to torque pad 90, boss 92, torque tube 64.

Brake system 12 includes a coupling system 95 (shown in dashed lines in FIG. 2) configured to couple plate member 20 and support member 64. In examples, coupling system 95 is configured to couple plate member 20 and a flange portion 103 of support member 64 ("support member flange portion 103"). Coupling system 95 may be configured to remain substantially unloaded when plate member 20 transfers the compression force to support member 64 in response to the actuator force FA. For example, coupling system 95 may be configured such that plate member 20 transfers substantially all of the compression force to support member 64 (e.g., support member flange portion 103) via torque pad 90 and/or one or more other torque pads and transfers substantially none of the compression force to support member 64 via coupling system 95 when plate member 20 receives the compression force from disc stack 16.

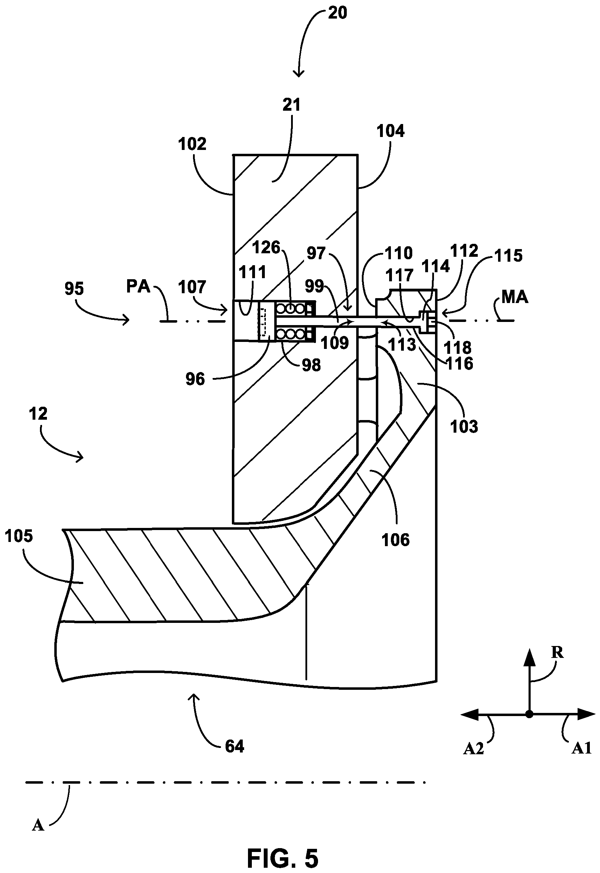

Coupling system 95 is configured to limit movement of plate member 20 relative to support member 64 in an axial direction of the wheel. For example, brake system 12 may be configured to transfer the compression force from disc stack 16 to plate member 20 in first axial direction A1. Coupling system 95 may be configured to limit movement of plate member 20 relative to support member 64 in at least second axial direction A2. In examples, coupling system 95 is configured to allow some movement of plate member 20 relative to support member 64 in first axial direction A1 and/or second axial direction A2 (e.g., movement caused by the compression force and/or other operations of brake system 12) while limiting a maximum displacement of plate member 20 from support member 64 in at least second direction A2. Coupling system 95 may include a pin member (e.g., pin 97 (FIG. 5)) configured to limit the maximum displacement of plate member 20 from support member 64 in at least second direction A2. Coupling system 95 may include an elastic member (e.g., elastic member 126 (FIG. 5)) configured substantially hold the pin member substantially stationary relative to support member 64 when plate member 20 moves relative to support member 64.

Thus, brake system 12 may be utilized to reduce and/or eliminate the rotation of wheel 10 using a compression force by actuator 14 exerted on disc stack 16. Plate member 20 may be configured to react against the compression force, causing a compression of disc stack 16. Support member 64 may be configured to support plate member 20, such that support member 64 experiences a force (e.g., substantially parallel to axis A) when actuator 14 exerts the compression force on disc stack 16. Coupling system 95 is configured to allow some movement of plate member 20 relative to support member 64 in first axial direction A1 and/or second axial direction A2 while limiting a maximum displacement of plate member 20 from support member 64 in at least second direction A2.

Wheel 10 may be used with any variety of private, commercial, or military aircraft or other type of vehicle. Wheel 10 may be mounted to a vehicle via, for example, axial assembly 58. Axial assembly 58 may be mounted on a strut of a landing gear (not shown) or other suitable component of a vehicle to connect wheel 10 to the vehicle. Wheel 10 may rotate around axis A and axial assembly 58 to impart motion to the vehicle. Wheel 10 is shown and described to provide context to the brake system described herein, however the brake system described herein may be used with any suitable wheel assembly in other examples.

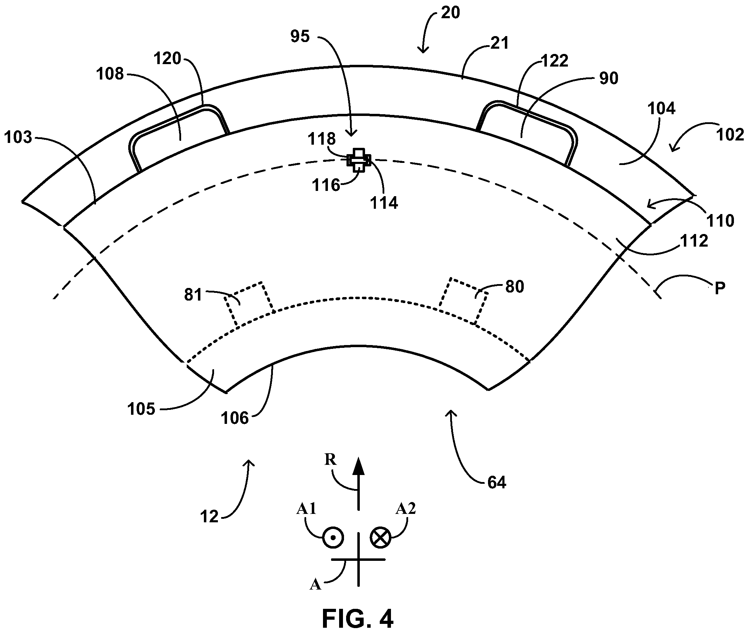

FIG. 3 illustrates a schematic end view of a portion of brake system 12 viewed in the direction of first axial direction A1. In FIG. 3, first axial direction A1 proceeds into the page and second axial direction A2 proceeds out of the page. FIG. 4 illustrates a schematic end view of the portion of brake system 12 viewed in the direction of axial direction A2. In FIG. 4, second axial direction A2 proceeds into the page and first axial direction A1 proceeds out of the page. FIG. 5 illustrates a schematic plan view of the portion of brake system 12, with support member 64, plate member 20, and a washer 138 illustrated as cross-sections with a cutting plane taken parallel to the page and passing through plate member 20, support member 64, washer 138, and axis of rotation A. FIG. 3, FIG. 4, and FIG. 5 are illustrated in accordance with the first axial direction A1, second axial direction A2, and radial direction R directions shown.

In examples, support member 64 includes a support member body 106 defining a longitudinal portion 105 ("support member longitudinal portion 105") and support member flange portion 103. In examples, support member longitudinal portion 105 supports and/or defines one or more splines such as spline 80 and second spline 81. Support member flange portion 103 may support one or more torque pads positioned between plate member 20 and support member flange portion 103, such as torque pad 90 and a second torque pad 108. In FIG. 3, support member flange portion 103 is hidden behind plate member 20 and shown in dashed lines. Torque pads 90, 108 are hidden behind plate member 20 and illustrated with dashed lines. In FIG. 4, support member longitudinal portion 105, spline 80, and second spline 81 are hidden behind support member flange portion 103 and plate member 20 and shown in dashed lines.

In examples, support member longitudinal portion 105 is configured to extend in a direction substantially parallel to axis of rotation A (e.g., substantially parallel to first axial direction A1 and/or second axial direction A2). In some examples, support member longitudinal portion 105 is configured to surround axis of rotation A. For example, support member longitudinal portion 105 may define a substantially annular body surrounding axis of rotation A. Support member longitudinal portion 105 may support and/or define one or more splines such as spline 80 and second spline 81.

In examples, support member flange portion 103 extends radially outward (e.g., substantially in the radial direction R) from support member longitudinal portion 105. In some examples, support member flange portion 103 defines one or more bosses (e.g., boss 92 (FIG. 2)) supporting torque pads 90, 108. In some examples, torque pads 90, 108 and/or other torque pads of brake system 12 may be radially displaced from axis A (e.g., substantially in the radial direction R) around perimeter P defined by support member 64 (e.g., support member flange portion 103). In some examples, brake system 12 is configured such that torque pads 90, 108 and/or other torque pads of brake system 12 define a substantially circumferential pattern around axis A. In some examples, torque pads 90, 108 and/or other torque pads of brake system 12 may be spaced such that a spacing distance (e.g., an arc length) between an adjacent torque pads is substantially equal around axis A. In some examples, torque pads 90, 108 and/or other torque pads of brake system 12 may be spaced such that the spacing distance (e.g., the arc length) between adjacent torque pads varies around axis A. The spacing distance and/or arc length may be defined in a plane substantially perpendicular to axis A.

Plate member 20 defines a first side 102 ("first plate side 102") and a second side 104 ("second plate side 104") substantially opposite first plate side 102. In examples, a body 21 of plate member 20 ("plate member body 21") defines first plate side 102 and/or second plate side 104. In examples, plate member 20 is configured such that at least some portion of plate member body 21 is between first plate side 102 and second plate side 104. Support member 64 (e.g., support member flange portion 103) defines a first side 110 ("first member side 110") and a second side 112 ("second member side 112") substantially opposite first member side 110. In examples, support member body 106 defines first member side 110 and/or second member side 112.

In examples, support member 64 is configured such that at least some portion of support member body 106 is between first member side 110 and second member side 112. In examples, brake system 12 is configured such that (as depicted in FIG. 5), second plate side 104 substantially faces first member side 110 when coupling system 95 couples support member 64 (e.g., support member flange portion 103) and plate member 20. Coupling system 95 extends between plate member 20 and support member 64 (e.g., support member flange portion 103).

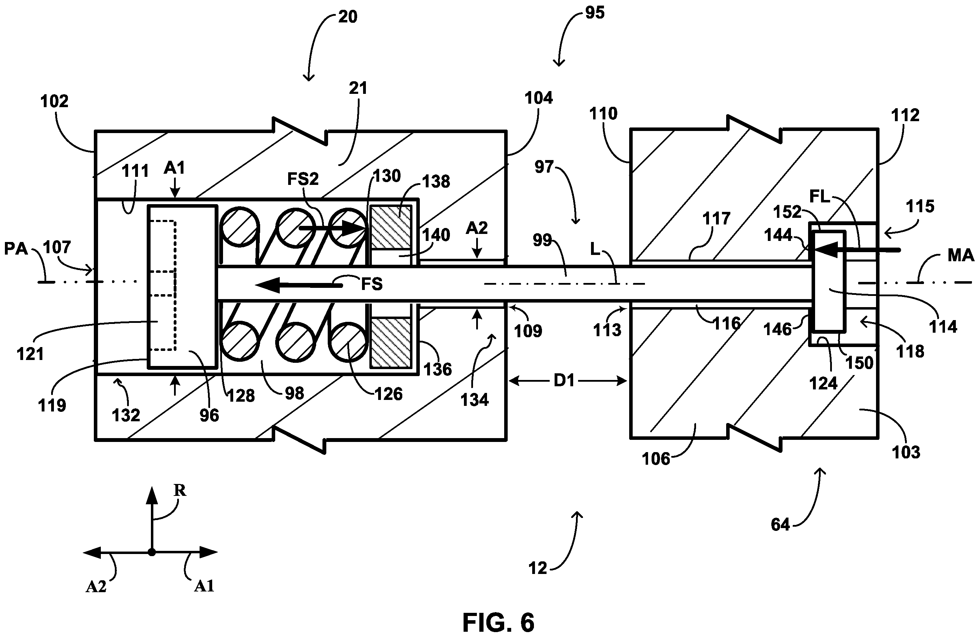

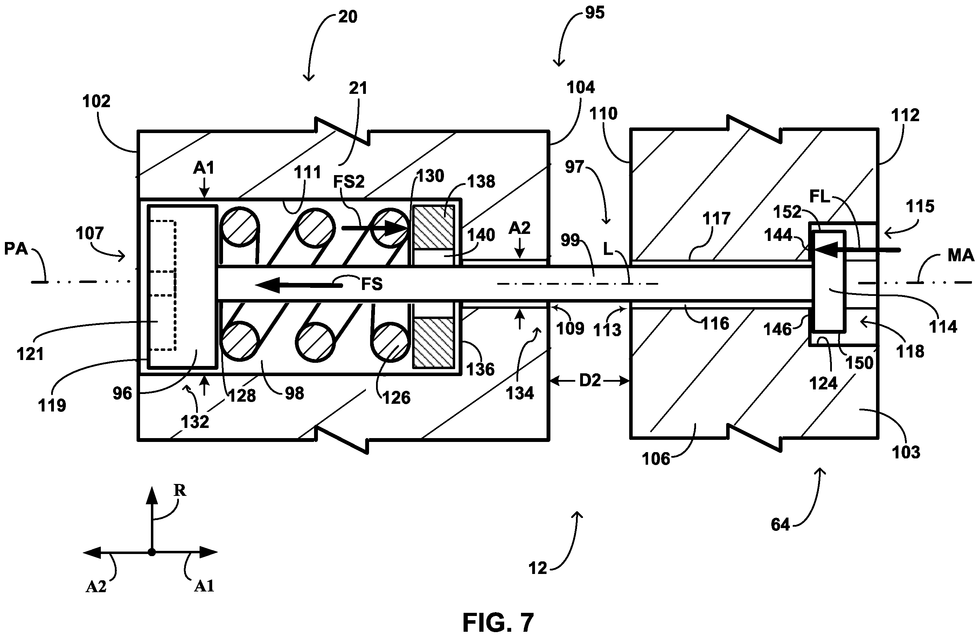

For example, FIG. 6 illustrates coupling system 95 with plate member 20 in a first position relative to support member 64, with support member 64, plate member 20, elastic member 126, and washer 138 illustrated as cross-sections with a cutting plane taken parallel to the page and passing through plate member 20, support member 64, washer 138, and elastic member 126. FIG. 7 illustrates coupling system 95 with plate member 20 in a second position relative to support member 64, with support member 64, plate member 20, elastic member 126, and washer 138 illustrated as cross-sections with a cutting plane taken parallel to the page and passing through plate member 20, support member 64, washer 138, and elastic member 126. FIG. 6 and FIG. 7 are illustrated in accordance with the first axial direction A1, second axial direction A2, and radial direction R directions shown.

Plate member 20 defines a plate passage 98 extending from first plate side 102 to second plate side 104. In examples, plate member body 21 defines a first opening 107 ("first plate opening 107") which opens from plate passage 98 to first plate side 102. Plate member body 21 may define a second opening 109 ("second plate opening 109") which opens from plate passage 98 to second plate side 104. In examples, plate passage 98 is bounded by a boundary 111 ("plate passage boundary 111") defined by plate member body 21. In examples, plate passage 98 and/or plate passage boundary 111 define a passage axis PA extending through plate passage 98. Plate passage boundary 111 may surround plate passage axis PA. In examples, passage axis PA intersects first plate opening 107 and second plate opening 109. In some examples, passage axis PA is substantially parallel to first axial direction A1 and/or second axial direction A2 when support member 64 (e.g., support member longitudinal portion 105) supports plate member 20.

Support member 64 (e.g., support member flange portion 103) defines a member passage 116 extending from first member side 110 to second member side 112. In examples, support member body 106 defines a first opening 113 ("first member opening 107") which opens from member passage 116 to first member side 110. Support member body 106 may define a second opening 115 ("second member opening 115") which opens from member passage 116 to second member side 112. In examples, member passage 116 is bounded by a boundary 117 ("member passage boundary 117") defined by support member body 106. In examples, member passage 116 and/or member passage boundary 117 define a member passage axis MA extending through member passage 116. Member passage boundary 117 may surround member passage axis MA. In examples, member passage axis MA intersects first member opening 113 and second member opening 115. In some examples, member passage axis MA is substantially parallel to first axial direction A1 and/or second axial direction A2 when second plate side 104 substantially faces first member side 110 and/or when coupling system 95 couples support member 64 (e.g., support member flange portion 103) and plate member 20.

In some examples, brake system 12 is configured such that member passage axis MA extends through plate passage 98 and member passage 116 when second plate side 104 substantially faces first member side 110 and/or when coupling system 95 couples support member 64 (e.g., support member flange portion 103) and plate member 20. Brake system 12 may be configured such that member passage axis MA intersects first plate opening 107 and second member opening 115 when member passage axis MA extends through plate passage 98 and member passage 116. In examples, plate passage boundary 111 and member passage boundary 117 surround member passage axis MA when member passage axis MA extends through plate passage 98 and member passage 116.

In some examples, brake system 12 is configured such that plate passage axis PA extends through plate passage 98 and member passage 116 when second plate side 104 substantially faces first member side 110 and/or when coupling system 95 couples support member 64 (e.g., support member flange portion 103) and plate member 20. Brake system 12 may be configured such that plate passage axis PA intersects first plate opening 107 and second member opening 115 when plate passage axis PA extends through plate passage 98 and member passage 116. In examples, plate passage boundary 111 and member passage boundary 117 surround plate passage axis PA when plate passage axis PA extends through plate passage 98 and member passage 116.

Coupling system 95 is configured to couple plate member 20 and support member flange portion 103. Coupling system 95 includes pin 97 including a shank portion 99, a head portion 96 coupled to a first end of shank portion 99, and a locking tail 114 coupled to a second end of shank portion 99 opposite the first end. Shank portion 99 is configured to extend from plate passage 98 to member passage 116. In examples, shank portion 99 defines a longitudinal axis L (FIG. 6) extending between head portion 96 and locking tail 114. In some examples, first plate opening 107, plate passage boundary 111, and second plate opening 109 are configured such that locking tail 114 may transit in first axial direction A1 through first plate opening 107, plate passage boundary 111, and second plate opening 109 such that, for example, pin 97 may be inserted (e.g., by an installer) in first axial direction A1 through plate passage 98 and member passage 116.

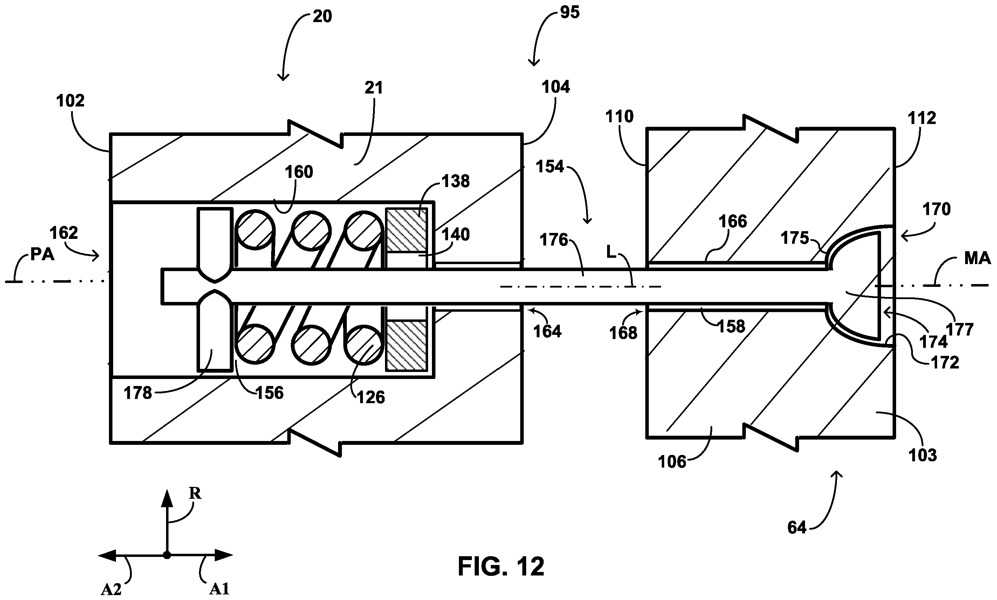

As will be discussed, in some examples, coupling system 95 is configured to limit the transit of a locking tail (e.g., locking tail 177 (FIG. 12)) through a member passage (e.g., member passage 158 (FIG. 12)) in first axial direction A1. In these examples, the coupling system may be configured such that shank portion 99 may be inserted (e.g., by an installer) in second axial direction A2 through the member passage.

Pin 97 may be configured such that head portion 96 disposes (e.g., positions) within plate passage 98 when shank portion 99 extends from plate passage 98 to member passage 116. Pin 97 may be configured such that locking tail 114 engages (e.g., contacts) some portion of support member 64 (e.g., support member flange portion 103) when shank portion 99 extends from plate passage 98 to member passage 116. Locking tail 114 may be configured to be disposed (e.g., to position) at least partially within member passage 116 when locking tail 114 engages the portion of support member 64. In examples, head portion 96 and/or plate passage 98 are configured such that head portion 96 is recessed (e.g., recessed in first axial direction A1) relative to first plate side 102 when head portion 96 disposes within plate passage 98. Member passage 116 and/or locking tail 114 may be configured such that locking tail 114 is recessed (e.g., recessed in second axial direction A2) relative to second member side 112 when locking tail 114 disposes within member passage 116.

In examples, member passage 116 includes a locking recess 118 configured to receive locking tail 114. Locking recess 118 may be defined by support member body 106. In examples, locking recess 118 is bounded by a boundary 124 ("locking recess boundary 124") defined by support member body 106. Locking recess 118 may be a portion of member passage 116. Locking recess boundary 124 may be a portion of member passage boundary 117. In examples, locking recess boundary 124 defines second member opening 115 and/or second member opening 115 opens into locking recess 118. Pin 97 may be configured such that locking tail 114 substantially seats against at least some portion of locking recess boundary 124 (e.g., bearing surface 144, 146 (FIG. 6)) within locking recess 118 when locking tail 114 engages support member 64. In examples, pin 97 (e.g., shank portion 99) is configured such that locking tail 114 seats against locking recess boundary 124 when head portion 96 is disposed within plate passage 98.

The engagement of locking tail 114 with support member 64 (e.g., support member flange portion 103) may avoid a necessity for a holding component (e.g., a cotter pin) to limit movement of pin 97 relative to support member 64. This may limit and/or eliminate a need for support of pin 97 using one or more support member bosses (e.g., torque tube bosses) protruding in second axial direction A2 (which may be required to, for example, limit and/or avoid extension of a pin toward wheel 10). Limiting and/or eliminating the need for the one or more support member bosses to support pin 97 may allow for an increase in the thickness of plate member 20 (e.g., thickness in first axial direction A1 and/or second axial direction A2) and increase in the amount of heat sink material comprising plate member 20 (e.g., plate member body 21). This may improve the heat transfer performance of plate member 20 during operations of brake system 12, improve the operational life of plate member 20, and/or provide other advantages.

Coupling system 95 includes an elastic member 126 configured to exert a force FS on pin 97 to, for example, assist in keeping locking tail 114 engaged with support member body 106. In examples, elastic member 126 is configured to keep locking tail 114 engaged with support member body 106 (e.g., locking recess boundary 124) when plate member 20 (e.g., plate member body 21) moves relative to support member body 106. Shank portion 99 may be configured to transfer force FS to locking tail 114 to cause locking tail 114 to exert a force FL on support member body 106 (e.g., locking recess boundary 124). Locking tail 114 may be configured to engage (e.g., contact and/or frictionally engage) support member body 106 and/or locking recess boundary 124 when shank portion 99 transfers force FS to locking tail 114 and/or locking tail 114 exerts force FL on support member body 106.

In examples, elastic member 126 may be configured to exert force FS on head portion 96. Head portion 96 may be configured to transfer force FS to shank portion 99. In examples, elastic member 126 may be configured to be disposed (e.g., position within) within plate passage 98 when head portion 96 is disposed within plate passage 98. Elastic member 126 may be configured to be disposed between head portion 96 and locking tail 114 when head portion 96 is disposed within plate passage 98, locking tail 114 is disposed within member passage 116 (e.g., locking recess 118), and/or shank portion 99 extends from plate passage 98 to member passage 116.

Elastic member 126 may be configured to exert force FS on pin 97 in a direction from support member 64 (e.g., support member flange portion 103) toward plate member 20 (e.g., in the second axial direction A2). In some examples, brake system 12 is configured to exert a compression force on plate member 20 (e.g., via disc stack 16 (FIG. 2)) in first axial direction A1 and elastic member 126 is configured to exert force FS in second axial direction A2. In examples, elastic member 126 is configured to (e.g., by exerting force FS) hold at least some portion of pin 97 (e.g., head portion 96, shank portion 99, and/or locking tail 114) substantially stationary relative to support member body 106 when plate member body 21 moves relative to support member body 106.

For example, FIG. 6 depicts coupling system 95 with plate member 20 in a first position relative to support member 64, such that second plate side 104 and first member surface 110 define a displacement D1 between plate member body 21 and support member body 106. FIG. 7 depicts coupling system 95 with plate member 20 in a second position relative to support member 64, such that second plate side 104 and first member surface 110 define a displacement D2 between plate member body 21 and support member body 106. Displacement D2 is less than displacement D 1. Plate member 20 may be configured to move toward support member 64 (e.g., to transition from displacement D1 to displacement D2) when brake system 12 compresses disc stack 16, and/or during other operations of brake system 12 or wheel 10 (FIG. 1). For example, plate member 20 may be configured to move toward support member 64 when first plate side 102 receives the compression force from disc stack 16.

Elastic member 126 may be configured to continue to exert force FS when plate member 20 is in the first position relative to support member 64 (FIG. 6), when plate member 20 is in the second position relative to support member 64 (FIG. 7), as plate member 20 transitions from the first position to the second position, and/or as plate member 20 transitions from the second position to the first position. Elastic member 126 may exert force FS to keep locking tail 114 engaged with support member body 106 when plate member 20 is in the first position, in the second position, transitions from the first position to the second position, and/or transitions from the second position to the first position.

In examples, elastic member 126 is configured to (e.g., using force FS) substantially maintain a position of head portion 96 relative to support member body 106 (e.g., first member surface 110) as plate member 20 transitions from the first position to the second position and/or transitions from the second position to the first position. Elastic member 126 may be configured to (e.g., using force FS) substantially maintain a position of shank portion 99 relative to support member body 106 (e.g., first member surface 110) as plate member 20 transitions from the first position to the second position and/or transitions from the second position to the first position. Elastic member 126 may be configured to (e.g., using force FS) substantially maintain a position of locking tail 114 relative to support member body 106 (e.g., second member surface 112 and/or locking recess boundary 124) as plate member 20 transitions from the first position to the second position and/or transitions from the second position to the first position.

It is understood that the magnitude of force FS exerted by elastic member 126 may vary as plate member 20 establishes the first position, the second position, or transitions between the first position and the second position. For example, elastic member 126 may be configured to exert force FS having a first magnitude when plate member 20 is in the first position (FIG. 6) and be configured to exert force FS having a second magnitude different from the first magnitude when plate member 20 is in the second position (FIG. 7). In some examples, elastic member 126 is configured to expand when plate member 20 transitions from the first position to the second position. In some examples, the second magnitude is less than the first magnitude. Elastic member 126 may be a substantially elastically deforming element which exhibits a change in shape when a force is applied to elastic member 126 (e.g., a force causing compression of elastic member 126 and/or expansion of elastic member 126), and which substantially reverses the change in shape when the force is removed. Elastic member 126 may include, for example, a helical spring, a leaf spring, and/or another elastic member. In some examples, elastic member 126 may be configured to at least partially surround shank portion 99 (e.g., as shank portion 99 extends into plate passage 98).

In some examples, elastic member 126 defines a first end 128 ( "first member end 128") and a second end 130 ("second member end 130") opposite first member end 128. Elastic member 126 may be configured to exert force FS using first member end 128 and impart a force FS2 in a direction opposite force FS to plate member body 21 (e.g., plate passage boundary 111) using second member end 130. In examples, coupling system 95 is configured to cause second member end 130 to remain substantially stationary with respect to plate member body 21 when first member end 128 (and/or pin 97) moves relative to plate member body 21. In examples, plate passage boundary 111 is configured to cause second member end 130 to remain substantially stationary with respect to plate member 20 when first member end 128 moves relative to plate member 20.

For example, plate passage boundary 111 may define a first dimension A1 in a first portion 132 of plate passage 98 and define a second dimension A2 in a second portion 134 of plate passage 98. Second dimension A2 may be less than first dimension A1. Plate passage boundary 111 may define a bearing surface 136 substantially between first portion 132 and second portion 134. In examples, bearing surface 136 is a surface defined by plate passage boundary 111 as plate passage boundary 111 transitions from first dimension A1 to second dimension A2. Bearing surface 136 may be configured to cause second member end 130 to remain substantially stationary with respect to plate member 20 when first member end 128 moves relative to plate member 20. In examples, bearing surface 136 is configured to receive force FS2 imparted by second member end 130. In examples, first dimension A1 is substantially parallel to second dimension A2. In some examples, first dimension A1 and second dimension A2 are substantially parallel to radial direction R.

First plate opening 107 may define dimension A1. Second plate opening 109 may define dimension A2. In examples, first dimension A1 and/or second dimension A2 are substantially perpendicular to member passage axis MA. In examples, second portion 134 is between first portion 132 and second plate opening 109. First portion 132 may be between second portion 134 and first plate opening 107. In some examples, plate passage boundary 111 is configured such that first portion 132 and second portion 134 substantially define a counterbore.

Head portion 96 may be configured to be disposed within plate passage 98 when shank portion 99 extends between plate passage 98 and member passage 116 and locking tail 114 engages locking recess boundary 124. In examples, head portion 96 is configured to be disposed within plate passage 98 such that head portion 96 is recessed (e.g., in first axial direction A1) relative to first plate side 102. For example, head portion 96 may include a head face 119 configured to face in a direction away from shank portion 99 and/or locking tail 114. Pin 97 (e.g., shank portion 99) may be configured such that that head face 119 portion 96 is displaced in first axial direction A1 from first plate side 102 when locking tail 114 engages locking recess boundary 124.

In some examples, coupling system 95 includes a washer 138 configured to engage plate passage boundary 111. Washer 138 may be configured to engage plate passage boundary 111 such that washer 138 remains substantially stationary with respect to plate member 20. In some examples, washer 138 is configured to engage bearing surface 136. In examples, elastic member 126 is configured to engage washer 138 as washer 138 engages plate passage boundary 111. Washer 138 may be configured to receive force FS2 from elastic member 126 (e.g., second member end 130) and transfer force FS2 to plate member body 21 (e.g., plate member boundary 111).

In examples, washer 138 is configured to at least partially surround shank portion 99 and/or passage axis PA when washer 138 engages plate passage boundary 111. Washer 138 may be configured to be disposed between head portion 96 and locking tail 114 when head portion 96 is disposed within plate passage 98, locking tail 114 is disposed within member passage 116 (e.g., locking recess 118), and/or shank portion 99 extends from plate passage 98 to member passage 116. In some examples, washer 138 (e.g., a body of washer 138) defines an aperture 140 (e.g., a washer hole). Washer 138 may be configured such that shank portion 99 and/or passage axis PA extend through aperture 140 when washer 138 is disposed between head portion 96 and locking tail 114.

In examples, locking tail 114 is configured to establish a locked configuration relative to locking recess boundary 124 and an unlocked configuration relative to locking recess boundary 124. Pin 97 may be configured such that locking tail 114 engages locking recess boundary 124 in the locked configuration such that, for example, locking recess boundary 124 resists displacement of pin 97 in second axial direction A2 when shank portion 99 extends through at least member passage 116. Pin 97 may be configured such that locking tail 114 substantially fails to engage locking recess boundary 124 in the unlocked configuration such that, for example, locking recess boundary 124 substantially allows displacement of pin 97 in second axial direction A2 when shank portion 99 extends through at least member passage 116. In examples, pin 97 is configured to cause locking tail 114 to transition between the locked configuration and the unlocked configuration (e.g., by transferring a torque from shank portion 99 to locking tail 114).

In some examples, head face 119 defines a drive 121 configured to receive the torque. In examples, drive 121 is configured to engage with a tool (e.g., a screw driver, hex wrench, or other driver tool) and receive the torque from the tool. Drive 121 may be configured to cause head portion 96 to transfer the torque to shank portion 99 when drive 121 receives the torque. Shank portion 99 may transfer the torque to locking tail 114 to, for example, cause locking tail 114 to transition between the unlocked configuration and the locked configuration. In examples, the torque is a torque substantially about longitudinal axis L of shank portion 99. In examples, head portion 119, shank portion 99, and/or locking tail 114 are configured to rotate substantially about longitudinal axis L defined by shank portion 99 when drive 121 receives the torque.

Hence, coupling system 95 may be configured such that pin 97 may be inserted (e.g., by an installer) into plate passage 98 and member passage 116 in first direction A1 with locking tail 114 in the unlocked configuration. The insertion may cause a compression of elastic member 126 as pin 97 inserts. The insertion may continue until locking tail 114 enters or transits beyond locking recess 118. A torque imparted to locking tail 114 (e.g., caused by a torque imparted to head portion 96 by the installer) may cause locking tail 114 to transition from the unlocked configuration to the locked configuration, such that locking tail 114 engages locking recess boundary 124. Elastic member 126 may exert force FS on pin 97 (e.g., head portion 96) to cause locking tail 114 to remain engaged with locking recess boundary 124.

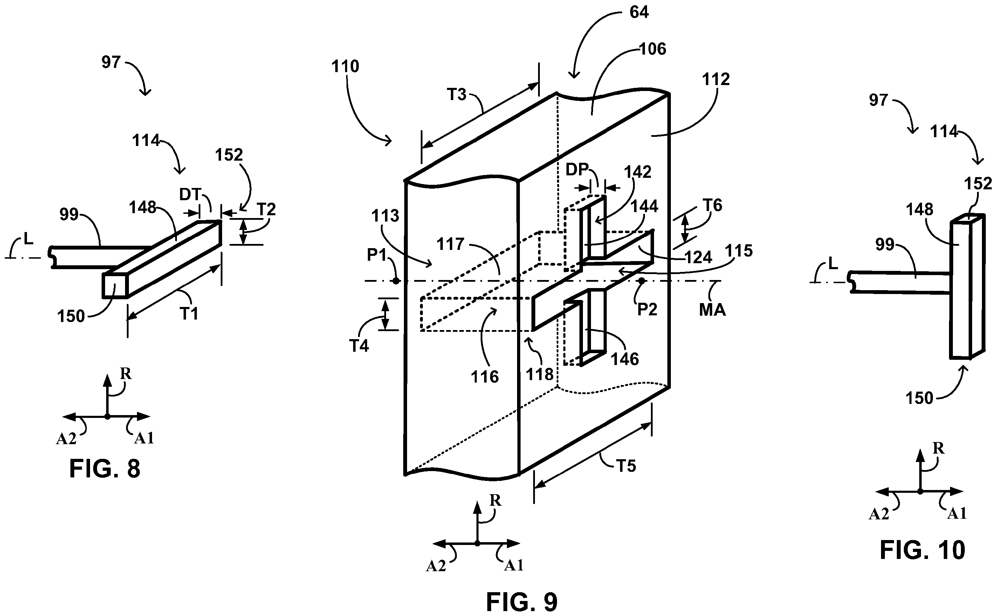

As an example, FIG. 8 illustrates a schematic perspective view of a locking tail 114 in an unlocked configuration relative to a locking recess boundary 124 depicted in FIG. 9. FIG. 9 illustrates a schematic perspective view of locking recess boundary 124 defined by support member body 106, with member passage axis MA passing through first member opening 113 and second member opening 115. In FIG. 9, portions of locking recess boundary 124, member passage boundary 117, and first member opening 113 which are hidden by support member body 106 are depicted with dashed lines. FIG. 10 illustrates a schematic perspective view of locking tail 114 in a locked configuration relative to locking recess boundary 124 of FIG. 9.

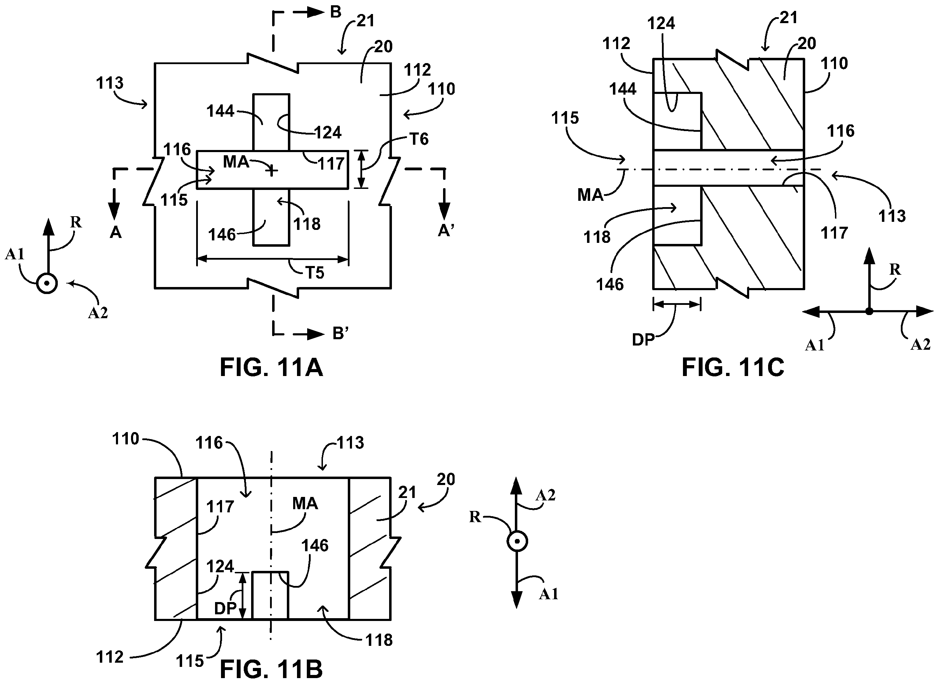

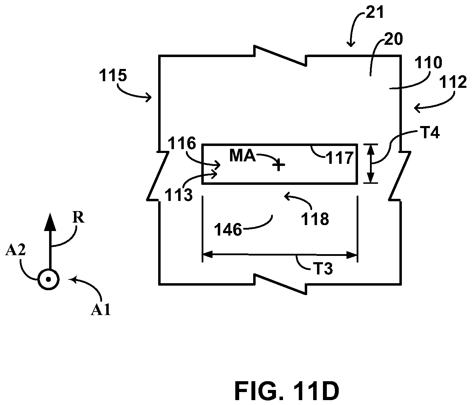

FIG. 11A illustrates a schematic end view of a portion of support member body 106 defining locking recess boundary 124 depicted in accordance with the first direction A1, second direction A2, and radial direction R shown, with first axial direction A1 proceeding out of the page and second axial direction A2 proceeding in to the page. FIG. 11B illustrates a schematic cross-sectional view of the portion of support member body 106 of FIG. 11A depicted in accordance with the first direction A1, second direction A2, and radial direction R shown, with radial direction R proceeding out of the page and a cutting plane indicated as A-A' in FIG. 11A. FIG. 11C illustrates a schematic cross-sectional view of the portion of support member body 106 of FIG. 11A and FIG. 11B depicted in accordance with the first direction A1, second direction A2, radial direction R, and a cutting plane indicated as B-B' in FIG. 11A. FIG. 11D illustrates a schematic end view of the portion of support member body 106 of FIG. 11A, FIG. 11B, and FIG. 11C depicted in accordance with the first direction A1, second direction A2, and radial direction R shown, with first axial direction A1 proceeding in to the page and second axial direction A2 proceeding out of the page.

Locking tail 114 may be configured to pass through member passage 116 and into locking recess 118 in a direction from first member side 110 to second member side 112 (e.g., in first axial direction A1) when locking tail 114 is in the unlocked configuration relative to locking recess boundary 124 (as depicted in FIG. 8). In examples, when locking recess boundary 124 defines second member opening 115, locking tail 114 is configured to pass through first member opening 113 and into locking recess 118 in the direction from first member side 110 to second member side 112. In examples, locking recess boundary 124 is configured to define one or more bearing surfaces 142 such as bearing surface 144 and bearing surface 146. Bearing surface 144, 146 may be configured such that, when locking tail 114 is in the unlocked configuration relative to locking recess boundary 124 (as depicted in FIG. 8), locking tail 114 may transit via member passage 116 and locking recess 118 in first axial direction A1 from a first point P1 displaced in second axial direction A2 from bearing surface 144, 146 to a second point P2 displaced in first axial direction A1 from bearing surface 144, 146. In examples, first point P1 and second point P2 are located on member passage axis MA. In examples, first point P1 is displaced in second axial direction A2 from first member side 110. Second point P2 may be displaced in first axial direction A1 from second member side 112.

Bearing surface 144, 146 may define a step and/or ledge extending in a direction away from member passage axis MA. In examples, bearing surface 144, 146 is recessed from second member side 112. For example, bearing surface 144, 146 may be displaced (e.g., in second axial direction A2) from second member side 112 by a depth DP. Locking recess boundary 124 may define depth DP such that locking tail 114 is recessed (e.g., displaced in second axial direction A2) or substantially even with second member surface 112 when locking tail 114 contacts bearing surface 144, 146. In some examples, locking recess boundary 124 defines bearing surface 144 and/or bearing surface 146 such that a direction vector lying on and/or substantially parallel to bearing surface 144 and/or bearing surface 146 defines an acute angle with member passage axis MA, such as an acute angle greater than about 20 degrees, greater than about 40 degrees, and/or greater than 60 degrees when member passage axis MA extends through first member opening 113 and second member opening 115. In some examples, bearing surface 144, 146 is substantially perpendicular to member passage axis MA when member passage axis MA extends through first member opening 113 and second member opening 115.

In examples, when locking tail 114 is in the locked configuration relative to locking recess boundary 124 (as depicted in FIG. 10), locking tail 114 and/or bearing surface 144, 146 are configured to limit and/or substantially prevent movement of locking tail 114 in second axial direction A2. Bearing surface 144, 146 may be configured to contact locking tail 114 to limit and/or substantially prevent movement of locking tail 114 in second axial direction A2. For example, when locking tail is in the locked configuration relative to locking recess boundary 124 (as depicted in FIG. 10) and located at second point P2, bearing surface 144, 146 may be configured to contact locking tail 114 to limit and/or substantially prevent movement of locking tail 114 from second point P2 to first point P1.

Hence, locking tail 114 and/or locking recess boundary 124 may be configured such that, when locking tail 114 is in the unlocked configuration, locking tail 114 may move (e.g., caused by movement of shank portion 99) through member passage 116 in first axial direction A1 from first point P1 to second point P2. Locking tail 114 may transition from the unlocked configuration of FIG. 8 to the locked configuration of FIG. 10 (e.g., due to a torque imparted by shank portion 99) at second point P2. With locking tail 114 in the locked configuration, bearing surface 144, 146 may contact locking tail 114 to limit and/or substantially prevent movement of locking tail 114 in second axial direction from second point P2 to first point P1. In examples, shank portion 99 transfers force FS (FIG. 6, FIG. 7) to locking tail 114 to cause locking tail 114 to exert force FL on bearing surface 144, 146, such that the contact between locking tail 114 and bearing surface 144, 146 is substantially maintained.

In examples, locking tail 114 is defined by a body 148 ("locking tail body 148") coupled to shank portion 99. Locking tail body 148 may define a first side 150 ("first tail side 150") and a second side 152 ("second tail side 152") substantially opposite first tail side 152. In some examples, locking tail body 148 is a substantially elongated member with first tail side 150 substantially defining and/or comprising a first end of the elongated body and second tail side 152 substantially defining and/or comprising a second end of the elongated body opposite the first end. In examples, locking tail 114 is configured such that at least some portion of locking tail body 148 is between first tail side 150 and second tail side 152. In examples, locking tail body 148 defines a first cross-sectional dimension T1 (e.g., a width) between first tail side 150 and second tail side 152. In some examples, locking tail body 148 defines a second cross-sectional dimension T2 (e.g., a height) orthogonal to and less than first cross-sectional dimension T1.

Support member body 106 and/or member passage boundary 117 may define a third cross-sectional dimension T3 (e.g., a width) of first member opening 113. In some examples, support member body 106 and/or member passage boundary 117 define a fourth cross-sectional dimension T4 (e.g., a height) of first member opening 113 orthogonal to and less than third cross-sectional dimension T3.

Locking tail 114 and/or member passage boundary 117 may be configured such that locking tail 114 may pass through first member opening 113 and member passage 116 when first cross-sectional dimension T1 and third cross-sectional dimension T3 define a first angle (which may include an angle of substantially zero degrees when first cross-sectional dimension T1 is substantially parallel to third cross-sectional dimension T3). Locking tail 114 and/or member passage boundary 117 may be configured such that support member body 106 substantially prevents locking tail 114 from passing through first member opening 113 and member passage 116 when an intersection of first cross-sectional dimension T1 and third cross-sectional dimension T3 defines a second angle different from the first angle. In examples, the first angle and/or the second angle are angles between a direction vector parallel to or coincident with first cross-sectional dimension T1 and a direction vector parallel to or coincident with third cross-sectional dimension T3.

Support member body 106, member passage boundary 117, and/or locking recess boundary 124 may define a fifth cross-sectional dimension T5 (e.g., a width) of second member opening 115. In examples, support member body 106, member passage boundary 117, and/or locking recess boundary 124 define a sixth cross-sectional dimension T6 (e.g., a height) of second member opening 115 orthogonal to and less than fifth cross-sectional dimension T5. In examples, depth DP is a dimension of locking recess 118 substantially perpendicular to fifth cross-sectional dimension T5 and/or sixth cross-sectional dimension T6.

Locking tail 114, member passage boundary 117, and/or locking recess boundary 124 may be configured such that locking tail 114 may enter locking recess 118 and/or pass through second member opening 115 when first cross-sectional dimension T1 and fifth cross-sectional dimension T5 define a third angle (which may include an angle of substantially zero degrees when first cross-sectional dimension T1 is substantially parallel to fifth cross-sectional dimension T5). Locking tail 114, member passage boundary 117, and/or locking recess boundary 124 may be configured such that support member body 106 substantially prevents locking tail 114 from entering locking recess 118 and/or passing through second member opening 115 when an intersection of first cross-sectional dimension T1 and fifth cross-sectional dimension T5 defines a fourth angle different from the third angle. In examples, the third angle and/or the fourth angle are angles between a direction vector parallel to or coincident with first cross-sectional dimension T1 and a direction vector parallel to or coincident with fifth cross-sectional dimension T5. In some examples, first cross-sectional dimension T1 and fifth cross-sectional dimension T5 define the fourth angle when bearing surface 144, 146 contact locking tail 114 (e.g., when locking tail 114 seats within locking recess 118).

In examples, first cross-sectional dimension T1 is less than third cross-sectional dimension T3 and greater than fourth cross-sectional dimension T4. First cross-sectional dimension T1 may be less than fifth cross-sectional dimension T5 and greater than sixth cross-sectional area T6. In some examples, locking tail body 148 defines a tail depth DT perpendicular to first cross-sectional dimension T1 and second cross-sectional dimension T2. Tail depth DT may be less than depth DP defined by locking recess boundary 124. In some examples, first cross-sectional dimension T1 is less than first dimension A1 and/or second dimension A2 (FIG. 6).

In some examples, the locking recess is configured to substantially prevent the locking tail from passing through the member passage from either the member first side to the member second side or from the member second side to the member first side. The pin may be configured such that, when the shank portion is inserted into the member passage in the second axial direction (e.g., the direction opposite the compression force of the brake system), the locking tail substantially seats within the locking recess. The shank portion may be configured to extend into the plate passage when the locking tail substantially seats in the locking recess. The head portion may be configured to couple to the shank portion (e.g., the head portion may be a C-clip), such that elastic member exerts a force on the head portion and the shank portion transfers the force to the locking tail to cause the locking tail to remain seated within the locking recess.

In some examples, coupling system 95 is configured to limit the transit of a locking tail through a member passage in first axial direction A1. Coupling system 95 may be configured such that a shank portion may transit through a member passage in second axial direction A2 until the locking tail substantially seats against a locking recess boundary. The shank portion may be configured to extend into a plate passage when the locking tail substantially seats against the locking recess boundary. Coupling system 95 may include a head portion which is configured to couple to the shank portion (e.g., within the plate passage), such that elastic member 126 exerts force FS on the head portion and the shank portion transfers force FS to the locking tail.

For example, FIG. 12 illustrates coupling system 95 including a pin 154 extending from a plate passage 156 to a member passage 158. FIG. 12 illustrates coupling system 95 with support member 64, plate member 20, elastic member 126, and washer 138 illustrated as cross-sections with a cutting plane taken parallel to the page and passing through plate member 20, support member 64, washer 138, and elastic member 126. A plate passage boundary 160 defines plate passage 156, a first plate opening 162, and a second plate opening 164. A member passage boundary 166 defines member passage 158, a first member opening 168, and a second member opening 170. Member passage boundary 166 includes a locking recess boundary 172 defining a locking recess 174 and a bearing surface 175. Pin 154 includes a shank portion 176, head portion 178, and locking tail 177. FIG. 12 depicts support member 64, plate member 20, elastic member 126, and washer 138 as cross-sections with a cutting plane taken parallel to the page and passing through plate member 20, support member 64, washer 138, and elastic member 126. Pin 154, plate passage 156, member passage 158, plate passage boundary 160, first plate opening 162, second plate opening 164, member passage boundary 166, member passage 158, first member opening 168, second member opening 170, locking recess boundary 172, bearing surface 175, locking recess 174, shank portion 176, head portion 178, and locking tail 177 are examples of pin 97, plate passage 98, member passage 116, plate passage boundary 111, first plate opening 107, second plate opening 109, member passage boundary 117, member passage 116, first member opening 113, second member opening 115, locking recess boundary 124, bearing surface 144, 146, locking recess 118, shank portion 99, head portion 96, and locking tail 114 respectively.

Second member opening 170, member passage boundary 166, and first member opening 168 are configured to allow shank portion 176 to transit through second member opening 170, member passage boundary 166, and first member opening 168 in second axial direction A2 (e.g., a direction from second member surface 112 to first member surface 110) until locking tail 177 engages locking recess boundary 172 (e.g., bearing surface 175). Locking recess boundary 172 is configured to substantially prevent further transit of shank portion 176 and locking tail 177 in second axial direction A2 when locking tail 177 engages locking recess boundary 172. For example, locking recess boundary 172 may be configured to prevent locking tail 177 exiting locking recess 174 by moving in second axial direction A2. Hence, coupling system 95 may be configured such that shank portion 176 may be inserted (e.g., by an installer) in second axial direction A2 through member passage 158 and plate passage 156 until locking tail 177 engages locking recess boundary 172.

Head portion 178 and shank portion 176 may be configured as substantially separable components of coupling system 95. In examples, head portion 178 is configured to both be engaged to and disengaged from the shank portion 176. Head portion 178 may be configured to remain substantially stationary when head portion 178 is engaged with shank portion 176. For example, head portion 178 may include a C-clip or other fastening component configured to enable an installer to fasten head portion 178 and shank portion 176. Thus, coupling system 95 may be configured such that head portion 178 may be fastened to shank portion (e.g., by an installer) after shank portion 176 is inserted (e.g., by the installer) in second axial direction A2 through member passage 158 and plate passage 156. In examples, elastic member 126 is configured to exert force FS (FIG. 6) on head portion 178 when head portion 178 is engaged with shank portion 176. Head portion 178 may be configured to transfer force FS (FIG. 6) from elastic member 126 to shank portion 176 when head portion 178 is engaged with shank portion 176.

Head portion 178 may allow a decreased size (e.g., a decreased cross-sectional diameter of) second plate opening 164 and/or plate passage 156 as compared to second plate opening 109 and/or plate passage 98 (e.g., FIG. 6). Additionally, head portion 178 may allow a decreased size of first member opening 168 and/or member passage 158 as compared to first member opening 113 and/or member passage 116 (e.g., FIG. 6). For example, the decreased size of second plate opening 164, plate passage 156, first member opening 168, and/or member passage 158 may result from avoiding a necessity for and/or capability of locking tail 177 to pass through plate passage 156 and member passage 158 in first axial direction A1. Instead, as discussed, shank portion 176 may be extended through plate passage 156 and member passage 158 in second axial direction A2 such that locking tail 114 resides within locking recess 174, and head portion 178 may subsequently be engaged (e.g., by an installer) to shank portion 176. The decreased size of second plate opening 164, plate passage 156, first member opening 168, and/or member passage 158 may reduce stress concentrations in plate member 20 and/or support member 64 (e.g., support member flange portion 103) during operations of brake system 12, and/or provide other advantages.

It is understood that, although head portion 96 and locking tail 114 are depicted in combination in FIGS. 3-7, and head portion 178 and locking tail 177 are depicted in combination in FIG. 12, this is not required. Coupling system 95 may include either of head portion 96 or head portion 178 with either of locking tail 114 or locking tail 177.

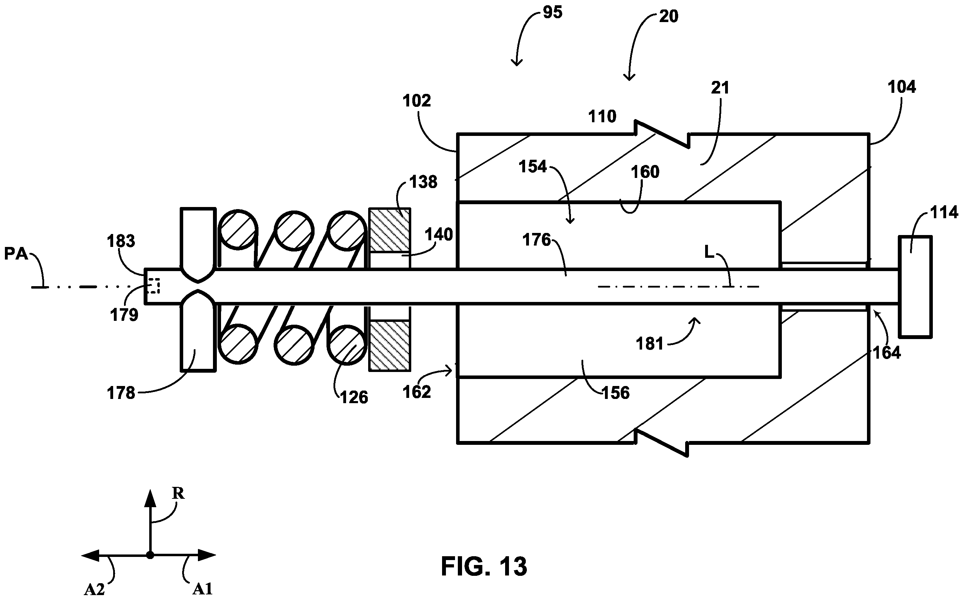

In some examples, coupling system 95 includes head portion 178 in combination with locking tail 114. For example, FIG. 13 illustrates coupling system 95 including a pin 181 including head portion 178 in combination with locking tail 114. FIG. 13 illustrates coupling system 95 with plate member 20, elastic member 126, and washer 138 illustrated as cross-sections with a cutting plane taken parallel to the page and passing through plate member 20, washer 138, and elastic member 126.

Pin 181 may allow substantial assembly of coupling system 95 independent from a proximity to support member 106. For example, pin 181 may be configured such that shank portion 176 may be extended through plate passage 156 (e.g., via second plate opening 164 in, for example, second axial direction A2) prior to installation of elastic member 126 and/or head portion 178. In examples, shank portion 176 has sufficient length (e.g., in first axial direction A1 and/or second axial direction A2) such that shank portion 176 extends in second axial direction A2 beyond (e.g., proud of) first plate side 102 when shank portion 176 extends through plate passage 156. For example, pin 181 may define an end 183 configured to extend in second axial direction A2 beyond first plate side 102 when shank portion 176 extends in second axial direction A2 beyond first plate side 102. Pin 181 may be configured such that elastic member 126 and/or head portion 178 may be installed as shank portion 176 extends beyond (e.g., proud of) first plate side 102. Hence, pin 181 may allow substantial assembly of coupling system 95 in a manner substantially independent of any proximity to support member 106.

Pin 181 may be configured to cause locking tail 114 to transition between the locked configuration and the unlocked configuration (e.g., by transferring a torque from shank portion 176 to locking tail 114). In some examples, Pin 181 defines a drive 179 configured to receive the torque. Driver 179 may be defined at end 183. In examples, drive 179 is configured to engage with a tool (e.g., a screw driver, hex wrench, or other driver tool) and receive the torque from the tool. Drive 179 may be configured to cause shank portion 176 head portion 96 to transfer the torque to locking tail 114 to, for example, cause locking tail 114 to transition between the unlocked configuration and the locked configuration. In examples, the torque is a torque substantially about longitudinal axis L of shank portion 176. In examples, shank portion 176 and/or locking tail 114 are configured to rotate substantially about longitudinal axis L when drive 179 receives the torque.

In examples, brake system 12 may include a plurality of coupling systems including coupling system 95. Other coupling systems in the plurality of coupling system may be configured similarly to coupling system 95. In some examples, the plurality of coupling systems may be radially displaced from axis A around perimeter P defined by support member 64 (e.g., support member flange portion 103). In some examples, brake system 12 is configured such that the plurality of coupling systems define a substantially circumferential pattern around axis A. In some examples, the plurality of coupling systems may be spaced such that a spacing distance (e.g., an arc length) between adjacent coupling systems is substantially equal around axis A. In some examples, the plurality of coupling systems may be spaced such that the spacing distance (e.g., the arc length) between adjacent coupling systems varies around axis A. The spacing distance and/or arc length may be defined in a plane substantially perpendicular to axis A.

Disc stack 16 may include components additional to those depicted in FIGS 2-11D and/or described above. For example, disc stack 16 can include one or more rotor drive inserts configured to insert at least partially within a drive slot of rotor disc 66, 68, 70, 72. As another example, disc stack 16 may include one or more spline inserts configured to insert at least partially within a spline slot of stator disc 74, 76, 78. As used herein, disc stack 16 may include one or more rotor discs such as rotor disc 66, 68, 70, 72, one or more stator discs such as stator disc 74, 76, 78, and other components configured to rotate and/or translate as a substantially rigid body with at least one of the rotor discs and/or the stator discs.

Brake discs described herein, including rotor discs 66, 68, 70, 72 and stator discs 74, 76, 78, may be manufactured from any suitable material. In some examples, the brake discs described herein may be manufactured from a metal or a metal alloy, such as a steel alloy. In some examples, the brake discs may be manufactured using a ceramic material, such as a ceramic composite. In some examples, the brake discs may be manufactured from a carbon-carbon composite material. In some examples, the brake discs may be manufactured using a carbon-carbon composite material having a high thermal stability, a high wear resistance, and/or stable friction properties. The brake discs may include a carbon material with a plurality of carbon fibers and densifying material. The carbon fibers may be arranged in a woven or non-woven as either a single layer or multilayer structure.

As used here, when a first portion of a system (e.g., brake system 12) is substantially parallel to a second portion of or an axis defined by the system, this may mean the first portion is parallel or nearly parallel to the second portion or the axis to the extent permitted by manufacturing tolerances. In some examples, when the first portion is substantially parallel to the second portion or the axis, this may mean a first vector defined by the first component of the system defines an angle of less than 10 degrees, in some examples less than 5 degrees, and in some examples less than 1 degree, with a second vector defined by the second component or the axis. When a first portion of the system is substantially perpendicular to a second portion of or an axis defined by the system, this may mean the first portion is perpendicular or nearly perpendicular to the second portion or the axis to the extent permitted by manufacturing tolerances. In some examples, when the first portion is substantially perpendicular to the second portion or the axis, this may mean that the first vector defined by the first component of the system defines an angle of at least 80 degrees, in some examples at least 85 degrees, and in some examples at least 89 degrees, with the second vector defined by the second component.

As used here, when a first portion of a system (e.g., brake system 12) supports a second portion of the system, this means that when the second portion causes a first force to be exerted on the first portion, the first portion causes a second force to be exerted on the second portion in response to the first force. The first force and/or second force may be a contact force and/or an action-at-a-distance force. For example, first force and/or second force may be mechanical force, a magnetic force, a gravitational force, or some other type of force. The first portion of the system may be a portion of the system or a portion of a component of the system. The second portion of the system may be another portion of the system or another portion of the same component or a different component. In some examples, when the first portion of the system supports the second portion of the system, this may mean the second portion is mechanically supported by and/or mechanically connected to the first portion.

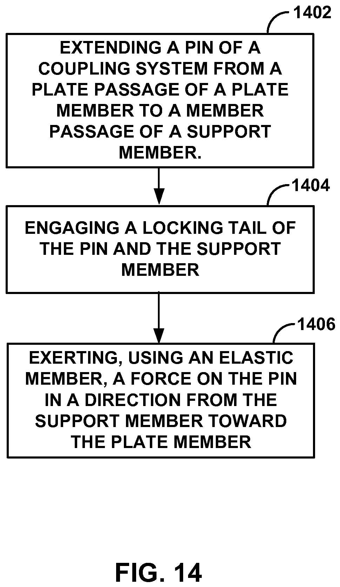

FIG. 14 is a flow diagram illustrating an example technique for coupling a plate member and a support member using a coupling system. While the technique is described with reference to plate member 20 and support member 64 described herein, the technique may be used with other components in other examples.

The technique includes extending a pin 97, 154, 181 of a coupling system 95 from a plate passage 98, 156 defined by a plate member 20 to a member passage 116, 158 defined by a support member 64 (1402). The technique may include extending pin 97, 154, 181 in a first axial direction A1 through a first plate opening 107, 162 defined by a first plate side 102, through a second plate opening 109, 164 defined by a second plate side 104, through a first member opening 113, 168 defined by a first member side 110, and into a locking recess 118, 174. In examples, the technique includes extending pin 97, 154, 181 in a second axial direction A2 through locking recess 118, 174, first member opening 113, 168, second plate opening 109, 164, and into plate passage 98, 156. In examples, the technique includes fastening a head portion 178 to a shank portion 176 of pin 154.

The technique includes engaging, using pin 97, 154, 181, a locking tail 114, 177 with support member 64 (1404). In examples, locking tail 114, 177 disposes within locking recess 118, 174 when locking tail 114, 177 engages support member 64. Locking tail 114, 177 may engage (e.g., contact) locking recess boundary 124, 172 when locking tail 114, 177 engages support member 64. In examples, locking tail 114, 177 engages (e.g., contacts) bearing surface 144, 146, 175 when locking tail 114, 177 engages support member 64.

The technique includes exerting, using an elastic member 126, a force FS on pin 97, 154, 181 (1406). Elastic member 126 may exert force FS on a head portion 96, 178 of pin 97, 154, 181. Head portion 96, 178 of pin 97, 154, 181 may transfer force FS to shank portion 99, 176 when elastic member 126 exerts force FS. Shank portion 99, 176 may transfer force FS to locking tail 114, 177 when elastic member 126 exerts force FS. Locking tail 114, 177 may exert a force FL on locking recess boundary 124, 172 when shank portion 99, 176 transfers force FS. In examples, extending pin 97, 154, 181 from plate passage 98 to member passage 116 includes compressing, using head portion 96, elastic member 126.

In some examples, the technique includes transiting, using pin 97, 181 locking tail 114 in first direction A1 through plate passage 98 and into locking recess 118 with locking tail 114 in an unlocked configuration relative to locking recess boundary 124. The technique may include transitioning, using pin 97, 181, locking tail 114 from the unlocked configuration to a locked configuration relative to locking recess boundary 124 to cause locking tail 114 to engage locking recess boundary 124. In examples, transitioning locking tail 114 from the unlocked configuration to the locked configuration includes transferring a torque, using shank portion 99, 176, about a longitudinal axis L to locking tail 114. In examples, transferring the torque using shank portion 99, 176 includes receiving, using a head face 119, the torque.

In some examples, the technique includes transiting, using pin 154, 181 shank portion 176 in second direction A2 at least through plate passage 156 through plate passage 98. The technique may include transitioning locking tail 114 from the unlocked configuration to the locked configuration by transferring a torque, using shank portion 176 about longitudinal axis L to locking tail 114. In examples, transferring the torque using shank portion 176 includes receiving, using driver 183.

In some examples, exerting force FS on pin 97, 154 includes exerting, using elastic member 126, force FS2 on a plate passage boundary 111, 160. In examples, elastic member 126 exerts force FS2 on washer 138 and washer 138 transfers force FS2 to plate passage boundary 111, 160. In some examples, washer 138 transfers force FS2 to plate passage boundary 111, 160 via a bearing surface 136 defined by plate passage boundary 111, 160.

The present disclosure includes the following examples.

Example 1: A brake system, comprising: a plate member defining a plate passage extending from a first plate side of the plate member to a second plate side of the plate member; a support member defining a member passage extending from a first member side of the support member to a second member side of the support member; a pin including a shank portion, a head portion coupled to a first end of the shank portion, and a locking tail coupled to a second end of the shank portion opposite the first end, wherein the shank portion is configured to extend from the plate passage to the member passage when the second plate side faces the first member side, and wherein the head portion is configured to dispose within the plate passage and the locking tail is configured to engage the support member when the shank portion extends from the plate passage to the member passage; and an elastic member configured to dispose within the plate passage and between the head portion and the locking tail when the head portion is disposes within the plate passage and the locking tail engages the support member, wherein the elastic member is configured to exert a force on the pin in a direction from the support member to the plate member.

Example 2: The brake system of example 1, wherein the plate member is configured to transfer a compression force from an actuator of the brake system to the support member, and wherein the elastic member is configured to exert the force on the pin in a direction opposite the compression force when the head portion disposes within the plate passage, the locking tail engages the support member, and the plate member transfers the compression force to the support member.

Example 3: The brake system of example 1 or example 2, wherein the elastic member includes a first member end configured to exert the force on the pin and a second member end opposite the first member end, and wherein a boundary of the plate passage is configured to cause the second end to remain substantially stationary with respect to the plate member when the first member end moves relative to the plate member.

Example 4: The brake system of any of examples 1-3, wherein the locking tail is configured to exert a force on the shank portion in a direction from the plate member to the support member when the locking tail engages the support member and the elastic member exerts the force on the pin in the direction from the support member to the plate member.

Example 5: The brake system of any of examples 1-4, further comprising a washer configured to at least partially surround the shank portion between the head portion and the locking tail, wherein the washer is configured to engage a boundary of the plate passage when the shank portion extends from the plate passage to the member passage, wherein the elastic member is configured to exert a second force on the washer in a direction from the plate member to the support member when the elastic member exerts the force on the pin in the direction from the support member to the plate member.

Example 6: The brake system of example 5, wherein the plate member defines a bearing surface extending from a first portion of the plate passage defining a first dimension to a second portion of the plate passage defining a second dimension less than the first dimension, wherein the washer is configured to engage the bearing surface when the washer engages the boundary of the plate passage.

Example 7: The brake system of example 5 or example 6, wherein the elastic member is configured to compress between the washer and the head portion when the washer engages the boundary of the plate passage, the head portion disposes within the plate passage, and the locking tail engages the support member.

Example 8: The brake system of any of examples 1-7, wherein the member passage includes a locking recess defined by the support member, wherein the locking recess opens to the second member side, and wherein the locking tail is configured to be disposed within the locking recess when the locking tail engages the support member and the head portion disposes within the plate passage.

Example 9: The brake system of example 8, wherein the support member defines a first direction from the first member side to the second member side and a second direction opposite the first direction, and wherein the locking recess is configured to limit movement of the locking tail through the member passage in the second direction when the shank portion extends from the plate passage to the member passage.

Example 10: The brake system of example 9, wherein the locking tail is configured to establish an unlocked configuration with respect to the locking recess and a locked configuration with respect to the locking recess, wherein the locking recess is configured to allow movement of the locking tail through the member passage in the first direction when the locking tail is in the unlocked configuration, and wherein the locking recess is configured to limit movement of the locking tail through the member passage in the second direction when the locking tail is in the locked configuration.

Example 11: The brake system of example 10, wherein the shank portion defines a longitudinal axis extending from the head portion to the locking tail, and wherein the locking tail is configured to transition between the unlocked configuration and the locked configuration when the shank portion transfers a torque about the longitudinal axis to the locking tail.

Example 12: The brake system of any of examples 1-11, wherein the head portion is configured to be engaged to and disengaged from the shank portion, and wherein the head portion is configured to remain stationary with respect to the shank portion when the head portion is engaged with the shank portion.

Example 13: The brake system of any of examples 1-12, wherein the head portion defines a drive face configured to face in a direction away from the shank portion when the shank portion extends from the plate passage to the member passage, and wherein the pin is configured to recess the drive face into the plate passage relative to the first plate side when the shank portion extends from the plate passage to the member passage and the locking tail engages the support member.

Example 14: The brake system of any of examples 1-13, wherein the locking tail is configured to pass through the plate passage at least in a direction from the first plate side to the second plate side.

Example 15: The brake system of any of examples 1-14, further comprising: a disc stack; and an actuator, wherein the plate member is a backing plate and the support member is a torque tube, wherein the disc stack configured to transfer a compression force from the actuator to the backing plate, wherein the backing plate is configured to transfer the compression force to the torque tube, and wherein the elastic member is configured to exert the force on the pin in a direction opposite the compression force when the elastic member is disposed between the head portion and the locking tail and the locking tail engages the support member.

Example 16: A brake system comprising: a backing plate defining a plate passage extending in an axial direction from a first side of the backing plate to a second side of the backing plate; a pin including: a shank portion extending through the plate passage, wherein the shank portion is configured to extend from the plate passage to a support member passage defined by a torque tube of the brake system and extending from a first side of the torque tube to a second side of the torque tube, wherein the second side of the backing plate is configured to face the first side of the torque tube, and wherein the backing plate is configured to transfer a compression force from a disc stack of the brake system to the torque tube, a head portion coupled to a first end of the shank portion, and a locking tail coupled to a second end of the shank portion opposite the first end, wherein the head portion is disposed within the plate passage, and wherein the locking tail is configured to dispose within the support member passage; a washer surrounding the shank portion between the head portion and the locking tail and engaging a boundary of the plate passage; and an elastic member surrounding the shank portion between the washer and the head portion, wherein the elastic member is configured to transfer a force in a direction opposite the compression force on the head portion when the elastic member is compressed between the washer and the head portion.

Example 17: The brake system of example 16, wherein: the locking tail is configured to establish an unlocked configuration with respect to a locking recess of the torque tube and a locked configuration with respect to the locking recess of the torque tube, the plate passage is configured to allow movement of the locking tail through the plate passage in a direction from the first side of the backing plate to the second side of the backing plate when the locking tail is in the unlocked configuration, and the plate passage is configured to limit movement of the locking tail through the plate passage in the direction from the first side of the backing plate to the second side of the backing plate when the locking tail is in the locked configuration.

Example 18: The brake system of example 16 or example 17, wherein the elastic member is configured to transfer a force in a direction of the compression force on the washer when the elastic member is compressed between the washer and the head portion, and wherein the washer is configured to transfer the force in the direction of the compression force to the boundary of the plate passage.

Example 19: A method comprising: extending, using a pin, a shank portion of the pin from a plate passage to a member passage, wherein the plate passage is defined by a plate member and extends from a first plate side of the plate member to a second plate side of the plate member, wherein the member passage is defined by a support member and extends from a first member side of the support member to a second member side of the support member, and wherein the second plate side faces the first member side; positioning, using the pin, a head portion coupled to a first end of the shank portion within the plate passage when the shank portion of the pin extends from the plate passage to the member passage; engaging, using the pin, a locking tail with the support member when the shank portion of the pin extends from the plate passage to the member passage and the head portion is disposed within the plate passage, wherein the locking tail is coupled to a second end of the shank portion opposite the first end; and exerting, using an elastic member between the head portion and the locking tail, a force on the pin in a direction from the support member to the plate member when the head portion disposes in the plate passage and the locking tail engages the support member.

Example 20: The method of example 19, further comprising: transferring, using the elastic member, a force in a first direction to the head portion; and transferring, using the elastic member, a force in a second direction opposite the first direction to a washer engaging a boundary of the plate passage.

Various examples have been described. These and other examples are within the scope of the following claims.

## Claims

1. A brake system, comprising:
a plate member defining a plate passage extending from a first plate side of the plate member to a second plate side of the plate member;
a support member defining a member passage extending from a first member side of the support member to a second member side of the support member;
a pin including a shank portion, a head portion coupled to a first end of the shank portion, and a locking tail coupled to a second end of the shank portion opposite the first end,
wherein the shank portion is configured to extend from the plate passage to the member passage when the second plate side faces the first member side, and
wherein the head portion is configured to dispose within the plate passage and the locking tail is configured to engage the support member when the shank portion extends from the plate passage to the member passage; and
an elastic member configured to dispose within the plate passage and between the head portion and the locking tail when the head portion is disposes within the plate passage and the locking tail engages the support member, wherein the elastic member is configured to exert a force on the pin in a direction from the support member to the plate member.

2. The brake system of claim 1, wherein the plate member is configured to transfer a compression force from an actuator of the brake system to the support member, and wherein the elastic member is configured to exert the force on the pin in a direction opposite the compression force when the head portion disposes within the plate passage, the locking tail engages the support member, and the plate member transfers the compression force to the support member.

3. The brake system of claim 1 or claim 2, wherein the elastic member includes a first member end configured to exert the force on the pin and a second member end opposite the first member end, and wherein a boundary of the plate passage is configured to cause the second end to remain substantially stationary with respect to the plate member when the first member end moves relative to the plate member.

4. The brake system of any of claims 1-3, wherein the locking tail is configured to exert a force on the shank portion in a direction from the plate member to the support member when the locking tail engages the support member and the elastic member exerts the force on the pin in the direction from the support member to the plate member.

5. The brake system of any of claims 1-4, further comprising a washer configured to at least partially surround the shank portion between the head portion and the locking tail, wherein the washer is configured to engage a boundary of the plate passage when the shank portion extends from the plate passage to the member passage, wherein the elastic member is configured to exert a second force on the washer in a direction from the plate member to the support member when the elastic member exerts the force on the pin in the direction from the support member to the plate member.

6. The brake system of claim 5, wherein the plate member defines a bearing surface extending from a first portion of the plate passage defining a first dimension to a second portion of the plate passage defining a second dimension less than the first dimension, wherein the washer is configured to engage the bearing surface when the washer engages the boundary of the plate passage.

7. The brake system of claim 4 or claim 5, wherein the elastic member is configured to compress between the washer and the head portion when the washer engages the boundary of the plate passage, the head portion disposes within the plate passage, and the locking tail engages the support member.

8. The brake system of any of claims 1-7, wherein the member passage includes a locking recess defined by the support member, wherein the locking recess opens to the second member side, and wherein the locking tail is configured to be disposed within the locking recess when the locking tail engages the support member and the head portion disposes within the plate passage.

9. The brake system of claim 8,
wherein the support member defines a first direction from the first member side to the second member side and a second direction opposite the first direction, and
wherein the locking recess is configured to limit movement of the locking tail through the member passage in the second direction when the shank portion extends from the plate passage to the member passage.

10. The brake system of claim 9,
wherein the locking tail is configured to establish an unlocked configuration with respect to the locking recess and a locked configuration with respect to the locking recess,
wherein the locking recess is configured to allow movement of the locking tail through the member passage in the first direction when the locking tail is in the unlocked configuration, and
wherein the locking recess is configured to limit movement of the locking tail through the member passage in the second direction when the locking tail is in the locked configuration.

11. The brake system of claim 10,
wherein the shank portion defines a longitudinal axis extending from the head portion to the locking tail, and
wherein the locking tail is configured to transition between the unlocked configuration and the locked configuration when the shank portion transfers a torque about the longitudinal axis to the locking tail.

12. The brake system of any of claims 1-11, wherein the head portion is configured to be engaged to and disengaged from the shank portion, and wherein the head portion is configured to remain stationary with respect to the shank portion when the head portion is engaged with the shank portion.

13. The brake system of any of claims 1-12, wherein the head portion defines a drive face configured to face in a direction away from the shank portion when the shank portion extends from the plate passage to the member passage, and wherein the pin is configured to recess the drive face into the plate passage relative to the first plate side when the shank portion extends from the plate passage to the member passage and the locking tail engages the support member.

14. The brake system of any of claims 1-13, further comprising:
a disc stack; and
an actuator,
wherein the plate member is a backing plate and the support member is a torque tube,
wherein the disc stack configured to transfer a compression force from the actuator to the backing plate,
wherein the backing plate is configured to transfer the compression force to the torque tube, and
wherein the elastic member is configured to exert the force on the pin in a direction opposite the compression force when the elastic member is disposed between the head portion and the locking tail and the locking tail engages the support member.

15. A method comprising:
extending, using a pin, a shank portion of the pin from a plate passage to a member passage, wherein the plate passage is defined by a plate member and extends from a first plate side of the plate member to a second plate side of the plate member, wherein the member passage is defined by a support member and extends from a first member side of the support member to a second member side of the support member, and wherein the second plate side faces the first member side;
positioning, using the pin, a head portion coupled to a first end of the shank portion within the plate passage when the shank portion of the pin extends from the plate passage to the member passage;
engaging, using the pin, a locking tail with the support member when the shank portion of the pin extends from the plate passage to the member passage and the head portion is disposed within the plate passage, wherein the locking tail is coupled to a second end of the shank portion opposite the first end; and
exerting, using an elastic member between the head portion and the locking tail, a force on the pin in a direction from the support member to the plate member when the head portion disposes in the plate passage and the locking tail engages the support member.
